# EUROPEAN PATENT APPLICATION

(11) **EP 4 636 398 A2**
(43) Date of publication of application: **22.10.2025**
(21) Application number: 25192242.3
(22) Date of filing: 31.05.2023
(51) Int. Cl.: G01N 31/22

(54) **REACTIVE GEL MATERIAL FOR SUSTAINED WATER-BASED REACTIONS**

(30) Priority: 31.05.2022 US 202263347441 P; 16.06.2022 US 202263352912 P
(62) Divisional of application: 23814599.9
(71) Applicant: Everbond Interface Technologies, Inc., Waterloo, Ontario N2L 6K8 (CA)
(72) Inventor: YANG, Fut (kuo), Markham, Ontario, L3R 4Z2 (CA); WEN, Quan, Richmond Hill, Ontario, L4E 0N5 (CA); ZHAO, Boxin, Waterloo, Ontario, N2L 6K8 (CA)
(74) Representative: De Vries & Metman

(57) **Abstract**

Presently described are compositions and methods for reactive gel materials for sustained water-based reactions. The reactive materials can be used as reactive coatings for fabrics for protection against harmful chemicals, as fire retarding barriers on surfaces, as chemical detectors for dry surfaces, and as recyclable coatings for carbon capture.

## Description

### CROSS-REFERENCE TO RELATED APPLICATIONS

The present disclosure claims the benefit of previously filed U.S. Provisional Patent Application serial number 63/347441, filed 31 May 2022, and titled: Reactive Gel Material for Sustained Water-Based Reactions; and U.S. Provisional Patent Application serial number 63/352912, filed 16 June 2022, and titled: Reactive Gel Material for Sustained Water-Based Reactions, the disclosures of which are incorporated herein by reference in their entirety.

### BACKGROUND

Field. The disclosure is directed to a sustained water-based reactive gel material comprising of non-evaporative hygroscopic liquid, reagents, and hydrophilic polymer network. Materials can be used, by way of non-limiting example, as a reactive coating for fabrics and surfaces for protection against harmful chemicals, as a chemical detector for dry surfaces or as a recyclable coating for carbon capture.

Background information. Water is a natural solvent and can readily wet most surfaces and participate in reactions as well. It provides a green reaction medium for many reactions including acid-base reactions, redox reactions, precipitation reactions, hydrolysis or enzymatic reactions. However, there are two key practical limitations associated with water as a reaction medium. One, it will evaporate in an open atmospheric environment. Two, as it is a liquid, it must be physically contained, restricting its use case.

Overcoming these limitations can lead to significant broadening of the applicability of water-based reactions in non-conventional settings such as water-based reactive coatings.

### SUMMARY

Presently described are reactive gel-based materials including a non-evaporative hygroscopic liquid, a hydrophilic gelling agent, and a chemical reagent. Also described are compositions, methods of using, and making the same. The described embodiments provide a reactive gel composite material and chemical reactive medium comprising the same that surprisingly and unexpectedly facilitates aqueous chemical reactions in a substantially water-free matrix, that is, the addition of water beyond what is captured from the atmosphere is not required. Stated differently, the described materials are capable of functioning as a chemical reactor for water-based reactions under open atmospheric conditions (without further addition of water). Notably, the reactive gel composite material and chemical reactive medium described herein retain the reagents within the gel reactor matrix along with the chemical reaction itself. The reactive gel materials are also well adapted for coating or layering onto a wide variety of substrates, e.g., textiles, synthetic, and rubber materials, thereby creating a lightweight, non-toxic, and breathable aqueous chemical reactor layer upon the substrate.

Thus, in one aspect, the disclosure provides a reactive gel material comprising a non-evaporative hygroscopic liquid, a hydrophilic gelling agent, and a chemical reagent; wherein the components are combined to form a reactive gel composite material.

Once formed, the reactive gel composite material as described herein does not include additional water (i.e., no additional water is added) other than from atmospheric moisture. In any aspect or embodiment described herein, the reactive gel material comprises a low boiling point solvent. In any aspect or embodiment described herein, the low boiling point solvent comprises water. In certain embodiments, no additional water is added. It should be understood that while the described reactive gel materials are substantially water-free, the presence of some water from atmospheric moisture is required. Accordingly, as used herein, "substantially water-free" does not mean that absolutely no water is present but rather that the addition of water is not required.

In any of the aspects or embodiments described herein, the non-evaporative hygroscopic liquid comprises at least one of a polyol (such as glycerol), glycol, an ionic liquid, sugar alcohol, or combination thereof.

In any aspect or embodiment described herein, the hydrophilic gelling agent comprises at least one of a hydrophilic polymer comprising a water-soluble polymer, a hydrophilic low-molecular weight gelator, or a combination thereof.

In any aspect or embodiment described herein, the hydrophilic gelling agent comprises at least one of a water-soluble or hydrophilic low-molecular weight gelator or any other substances that can gel (e.g., cellulose nanocrystals, polysacharride particles). In any aspect of embodiment described herein, the gelator is peptide-based, collagen-based, gelatin-based, protein-based, glucose-based, and/or includes compounds such as glycyrrhizic acid diethyl ester and combinations thereof. These gelators have been known to gel water, non-evaporative hygroscopic liquid such as glycerol, and combinations thereof.

In any aspect or embodiment described herein, the hydrophilic gelling agent comprises a hydrophilic polymer. In any aspect or embodiment described herein, the hydrophilic polymer comprises a water-soluble polymer. In any aspect or embodiment described herein, the polymers are crosslinked forming a polymer network matrix such that the reactive gel composite material is not free-flowing. In any aspect or embodiment described herein, the hydrophilic polymer comprises at least one of acrylate-based, e.g., polyacrylate; acrylamide-based, e.g., polyacrylamide; polysaccharide; polyethylene glycol; chitosan; polyvinyl alcohol; alginate; gelatin; agarose; or a combination thereof. In any aspect or embodiment described herein, the hydrophilic polymer comprises a cross-linked acrylate-based or acrylamide-based polymer, which forms a polymer network.

In any aspect or embodiment described herein, the reagent comprises at least one of a salt, an oxide, an oxidizing agent, a reducing agent, a microparticle, a nanoparticle, a metal-organic framework (MOF), an acid, a base, a reactant, a buffer, a catalyst, a chelating agent, a reactive absorbent, an analytical agent, a co-reactive agent, or a combination thereof.

In any aspect or embodiment described herein, the reagent leads to water-based or water-related reactions including acid-base reactions, displacement reactions, addition reactions, decomposition reactions, reduction-oxidation (redox) reactions, precipitation reactions, hydrolysis, enzymatic reactions, and combinations thereof.

In any aspect or embodiment described herein, the reactive gel material can form a composite or coating (unless the context indicates otherwise, a coating can be a full or partial coating) on or within (completely or partially) a substrate, e.g., a fabric or a textile, to form, e.g., coated substrate or a reactive gel-fabric composite. In any aspect or embodiment described herein, the reactive gel-fabric composite is semi-permeable to moisture and a reagent in the reactive gel reacts with reactants, e.g., chemicals in the atmosphere, such as toxic chemicals or contaminants or chemicals in another material that comes into contact with the reactive gel material. In any aspect or embodiment described herein, the reagent comprises a fire retardant and the reactive gel material serves as a fire-retardant barrier. In any aspect or embodiment described herein, the reactive gel material comprises a reagent that is an indicator or label that indicates the presence of a chemical or other agent, for example, changes a color or physical property change. In any aspect or embodiment described herein, the reactive gel material comprises a reagent that captures or adsorbs a chemical compound, e.g., a gas, such as oxygen, CO₂, carbon monoxide, radon, volatile organic compounds or the like, and/or indicates its presence via a chemical reaction, e.g., a color change.

In additional aspects, the disclosure provides methods of forming a reactive gel material comprising the steps of admixing a solution of a non-evaporative hygroscopic liquid, a hydrophilic gelling agent, with optional addition of crosslinkers and initiators, and a chemical reagent. In certain embodiments, the method includes initiating polymerization of the hydrophilic gelling agent in the presence of an initiator and/or crosslinker thereby inducing polymerization of the hydrophilic gelling agent to result in a hydrophilic polymer network.

In certain embodiments, the reactive gel material is utilized as a stand-alone reactive material, e.g., shaped into a form or poured into a container.

In additional aspects, the disclosure provides methods of forming a reactive gel material coating or layer on or within a substrate. For example, in any aspect or embodiment described herein, the method comprises the step of providing a reactive gel material as described herein, and coating or applying the reactive gel material on or within (or both) a substrate, e.g., a fabric or a textile or a solid surface, wherein the layer or coating may include a non-reactive barrier. In any of the aspects or embodiments described herein, the non-reactive barrier forms a physical barrier, for example, against a chemical or environmental insult, such as e.g., a pathogen, or physical insult such heat or fire. In an aspect, the cross-linked hydrophilic polymer network is acrylamide. In other aspects, a crosslinker and/or initiator is mixed with the hydrophilic chemical monomer to adjust the properties of the gel, for example, strength, rigidity, moisture content, or permeability.

In additional aspects, a non-reactive barrier is formed on the outside of the reactive gel material, creating a physical barrier that controls the material exchange between the reactive gel material and its surroundings.

The preceding general aspects and embodiments are given by way of example only and are not intended to be limiting on the scope of the present disclosure and appended claims. Additional objects and advantages associated with the compositions, methods, and processes of the present invention will be appreciated by one of ordinary skill in the art in light of the instant claims, description, and examples. For example, the various aspects and embodiments of the invention may be utilized in numerous combinations, all of which are expressly contemplated by the present description. These additional advantages, objects, and embodiments are expressly included within the scope of the present invention. The publications and other materials used herein to illuminate the background of the invention, and in particular cases, to provide additional details respecting the practice, are incorporated by reference.

### BRIEF DESCRIPTION OF THE DRAWINGS

The accompanying drawings, which are incorporated into and form a part of the specification, illustrate several embodiments of the present invention and, together with the description, serve to explain the principles of the invention. The drawings are only for the purpose of illustrating an embodiment of the invention and are not to be construed as limiting the invention. Further objects, features and advantages of the invention will become apparent from the following detailed description taken in conjunction with the accompanying figures showing illustrative embodiments of the invention, in which:
**Figure 1****.** The degradation of DFP by the coated fabrics; experimental noise was measured by having blank controls (no DFP).
**Figures 2A** and **2B****.** Typical evaporation of water across the coated fabric **(A)** and the associated water vapor transmission **(B);** error bars represent one standard deviation (n ≥ 6).
**Figure 3A** and **3B****.** Typical permeation of toxic chemicals across the coated fabric **(A)** and the associated total heat loss **(B);** error bars represent one standard deviation (n ≥ 3).
**Figure 4****.** Contact angle of topcoat particles; error bars represent one standard deviation (n ≥ 3).

### DETAILED DESCRIPTION

Presently described are reactive gel-based materials including a non-evaporative hygroscopic liquid, a hydrophilic gelling agent, and a chemical reagent. Also described are compositions, methods of using, and making the same. The described embodiments provide a reactive gel composite material and chemical reactive medium comprising the same that surprisingly and unexpectedly facilitates aqueous chemical reactions in a substantially water-free matrix, that is, the addition of water beyond what is captured from the atmosphere is not required. Stated differently, the described materials are capable of functioning as a chemical reactor for water-based reactions under open atmospheric conditions (without further addition of water). Notably, the reactive gel composite material and chemical reactive medium described herein retain the reagents within the gel reactor matrix along with the chemical reaction itself.

The reactive gel materials are also well adapted for coating or layering onto a wide variety of substrates, e.g., textiles, synthetic, and rubber materials, thereby creating a lightweight, non-toxic, and breathable aqueous chemical reactor layer upon the substrate. Thus, in one aspect, the disclosure provides a reactive gel material comprising a non-evaporative hygroscopic liquid, a hydrophilic gelling agent, and a chemical reagent; wherein the components are combined to form a reactive gel composite material.

The reactive gel material has a number of useful applications, including, for example, as a reactive matrix, a reactive layer, or reactive coating on a substrate, e.g., a reactive fabric coating. The skilled artisan will appreciate that the reactive gel material as described herein will also contain water at equilibrium with the hygroscopic liquid and the surrounding moisture in air to facilitate the desired reaction. Therefore, once formed, the reactive gel composite material as described herein does not require additional water (i.e., no additional water is required) other than from moisture in the surrounding environment. Accordingly, in certain embodiments the reactive gel material as described herein is substantially water-free or does not contain added water.

Unless otherwise specified all terms have their ordinary meaning, accepted in the art of polymer/gel technology.

Recitation of ranges of values are merely intended to serve as a shorthand method of referring individually to each separate value falling within the range, unless otherwise indicated, and each separate value is incorporated into the specification as if it were individually recited. Unless expressly indicated otherwise, the endpoints of all ranges are included within the range and independently combinable.

The articles "a" and "an" as used herein and in the appended claims are used herein to refer to one or to more than one (i.e., to at least one) of the grammatical object of the article unless the context clearly indicates otherwise. By way of example, "an element" means one element or more than one element.

The term "about," means approximately. When the term "about" is used in conjunction with a numerical range, it modifies that range by extending the boundaries above and below the numerical values set forth. Illustratively, the use of the term "about" indicates that values slightly outside the cited values, *i.e*., plus or minus 0.1% to 10%, which are also effective and safe are included in the value. Numerical ranges recited herein by endpoints include all numbers and fractions subsumed within that range (e.g., 1 to 5 includes 1, 1.5, 2, 2.75, 3, 3.90, 4, and 5).

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from anyone or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a nonlimiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

All method steps described in this disclosure can be performed in any order unless otherwise indicated or otherwise clearly contradicted by context. The use of any and all examples, or language indicating an example (e.g., "such as"), is intended merely for illustration and does not pose a limitation on the claimed scope unless explicitly claimed. No language in the specification should be construed as indicating any non-claimed element as essential to the practice of the embodiments of the claims.

As used herein, the phrase "less than" (e.g., less than about 2) or "less than or equal to" (e.g., less than or equal to about 2) followed by a number, means a non-zero number that is less than the stated number or a non-zero number that is less than or equal to the stated number, respectively.

In the claims, as well as in the specification above, all transitional phrases such as "comprises," "comprising," "including," "carrying," "having," "containing," "involving," "holding," "composed of," and the like are to be understood to be open-ended, i.e., to mean including but not limited to. Only the transitional phrases "consisting of' and "consisting essentially of' shall be closed or semi-closed transitional phrases, respectively, as set forth in the 10 United States Patent Office Manual of Patent Examining Procedures, Section 2111.03.

As used in the specification and the appended claims, the terms "for example," "for instance," "such as," "including" and the like are meant to introduce examples that further clarify more general subject matter. Unless otherwise specified, these examples are provided only as an aid for understanding the disclosure and are not meant to be limiting in any fashion.

As used herein, unless the context suggests otherwise, the terms "reactive gel material", "reactive gel material matrix" or like terms are used interchangeably to refer to a composition as described herein. The term "reactive gel medium" is used in certain contexts to refer to reactive gel material or reactive gel material matrix applied to or integrated with a substrate. The reactive gel media as described herein are surprisingly and unexpectedly efficient as an aqueous-based chemical reactor while also being light-weight and breathable making them ideal as a protective layer or coating for wearable materials.

As used herein, unless the context suggests otherwise, the term "polyol" can mean an organic compound containing multiple hydroxyl groups. Polyols containing two, three and four hydroxyl groups are diols, triols, and tetrols respectively.

As used herein, unless the context suggests otherwise, the terms "chelants", "chelators," "chelating agents," or "sequestering agents," can mean agents that by chelation, form a type of bonding of ions and molecules to metal ions. It involves the formation or presence of two or more separate coordinate bonds between a polydentate (multiple bonded) ligand and a single central metal atom.

As used herein, unless the context suggests otherwise, the term "composite material" refers to a material which is produced from two or more constituent materials. These constituent materials may have notably dissimilar chemical or physical properties and are merged to create a material with properties unlike the individual elements.

As used herein, unless the context suggests otherwise, the term "permeable" refers to the characteristic of a material in which it allows some ("semi-permeable") or all gas or liquid molecules to pass through it.

As used herein, unless the context suggests otherwise, the term "toxic chemical" refers to a substance that can be poisonous or cause detrimental health effects.

As used herein, unless the context suggests otherwise, the term "contaminant" refers to a polluting or poisonous substance that makes something impure.

As used herein, unless the context suggests otherwise, the term "ultrahydrophobic surface" or "superhydrophobic surface" refers to surfaces that are highly hydrophobic, i.e., extremely difficult to wet. In an aspect, the contact angles of a water droplet on a superhydrophobic or ultrahydrophobic material exceeds 135° or preferably 150°.

As used herein, unless the context suggests otherwise, the term "flame retardant" refers to chemicals that are applied to materials to prevent the start or slow the growth of fire. Hundreds of different flame retardants are known in the art and they are often broken into categories based on chemical structure and properties. In general, flame retardants are grouped based on whether they contain bromine, chlorine, phosphorus, nitrogen, metals, or boron exemplified by polybrominated diphenyl ethers (PBDE's), tetrabromobisphenol A (TBBPA), hexabromocyclododecane (HBCD), and organophosphate flame retardants (OPFRs).

As used herein, unless the context suggests otherwise, the term "cross-linking" refers to the use of cross-links to promote a change in a polymer's physical properties by linking of polymer chains using reactive cross-linking molecules or monomers or other chemical or physical means.

As used herein, unless the context suggests otherwise, the term "reagent" or "chemical reagent" refers to a substance that facilitates a chemical reaction and is inclusive of, e.g., reagents, reactants, catalysts, buffers, etc. In some cases, the reagent will be consumed in the process or reaction. However, in certain embodiments, the reactive gel material may comprise one or more reagents. In certain embodiments the reagent is a catalytic or enzymatic agent. In certain embodiments, the reagents can be recharged or reloaded, or purged, for example by washing with a solvent, a buffer, or dialysis or a combination thereof. In any aspect or embodiment described herein, the chemical reagent is a water soluble or water-miscible molecule that is less than about 10000 Daltons or less than about 9000, 8000, 7000, 6000, 5000, 4000, 3000, 2000, 1000 Daltons or below.

As used herein, unless the context suggests otherwise, the term "effective amount" refers to the amount of reagent, e.g., chemical reagent or reactant, included in the reactive gel material as described herein that is sufficient to effectuate the desired chemical reaction(s) or achieve the desired effect. As would be readily appreciated by the skilled artisan, the effective amount will vary depending on a number of factors including, by way of non-limiting example, the nature of the chemical reaction, the environmental conditions, moisture content of the atmosphere, volume of gel material, kinetics of the intended reaction, desired duration of the reactivity, concentration of reactant in the atmosphere, decomposition or half-life of the reagent, desired concentration in the gel, etc., which can be determined without undue experimentation by the skilled artisan in view of the present disclosure. For example, in certain embodiments, the amount of the chemical reagent in the reactive gel material will be between 0.00001, 0.0001, 0.001, 0.01, 0.1, 1, 5, 10, 15, 20, 25, 30, 35, 40, 45, 50, 55, 60, 65, 70, 75, 80, 85, or 90 wt% based on the weight of the hygroscopic liquid.

In any of the aspects or embodiments described herein, the reactive gel material comprises one or more, e.g., two or more, chemical reagents. In certain embodiments, the reactive gel material comprises a plurality of chemical reagents that facilitate the same reactions (additively or synergistically) or facilitate different reactions, and in certain embodiments, the reactions are complementary.

The disclosure provides a reactive gel material (i.e., a reactive gel composite material or reactive gel matrix) comprising a non-evaporative hygroscopic liquid, a hydrophilic gelling agent and a chemical agent wherein the components form a reactive gel composite material.

In certain aspects or embodiments, the reagent or chemical reagent in the reactive gel material is an agent in the reactive gel material composition imparting functions to the reactive gel material including functioning as a reactive barrier against a chemical or environmental insult, e.g., a pathogen, or physical insult such heat or fire. As such, in any of the aspects or embodiments described herein, the reagent can be, by way of non-limiting example, a compound, a macromolecule including a biomolecule or biopolymer (e.g., peptide, polypeptide, protein, nucleic acid, etc.), an acid, a base, a buffer, a chelating agent, a catalyst, a reactive absorbent or adsorbent, a fire retardant, a dye or label, a metal-organic framework (MOF) molecule, or an analytical reagent. In any aspect or embodiment described herein, the chemical reagent is a water soluble or water-miscible molecule that is less than about 10000 Daltons or less than about 9000, 8000, 7000, 6000, 5000, 4000, 3000, 2000, 1000 Daltons or below. Indeed, the reagent can be any reagent that lends itself to an aqueous reaction media. In any of the aspects or embodiments described herein, the gel material comprises an effective amount of a chemical reagent (or reactant), wherein the amount is sufficient to effectuate a chemical reaction.

Metal-organic frameworks (MOFs) are a class of compounds consisting of metal ions or clusters coordinated to organic ligands to form one-, two-, or three-dimensional structures. They are a subclass of coordination polymers, with the special feature that they are often porous. The organic ligands included are sometimes referred to as "struts" or "linkers", one example being 1,4-benzenedicarboxylic acid (BDC). Other examples of MOFs include zeolite imidazoles, carboxylates, and zirconium-based MOFs. See also Ma et al., Near-instantaneous catalytic hydrolysis of organophosphorus nerve agents with zirconium-based MOF/hydrogel composites. Chem Catalysis. 1:721-733 (2021), which is incorporated herein by reference in its entirety for all purposes.

In any of the aspects or embodiments described herein, the reactive gel material composition includes a non-evaporative hygroscopic liquid, a reagent, and a hydrophilic gelling agent, to perform water-based or water-related reactions within the gel material under open atmospheric conditions. In any of the aspects or embodiments described herein the reactive gel material composition includes a non-evaporative hygroscopic liquid, a reagent, and a hydrophilic gelling agent, to perform water-based or water-related reactions within the gel material under open atmospheric conditions in the absence of any additional (added) water.

In some aspects, the hydrophilic gelling agent is a low-molecular weight gelator. In certain embodiments, the hydrophilic gelling agent is a polymer composed of a three-dimensional, cross-linked network.

In any of the aspects or embodiments described herein, a hydrophilic gelling agent is any substance or combination of substances, under the conditions (e.g. temperature of from about - 40° C to about 100° C, and pressure of around 1 atmosphere) of the intended application of the gel material, where the inclusion of the hydrophilic gelling agent into the gel material makes the material non-flowing. For example, a polymer composed of a three-dimensional, cross-linked network.

In any of the aspects or embodiments described herein, the reactive gel material composition application in open atmospheric conditions means that, under the conditions (e.g., temperature and pressure) of the intended application of the gel material, the gel material has direct or indirect access to ambient air containing water vapor or moisture (i.e. the air has a non-zero relative humidity).

In any of the aspects or embodiments described herein, the hydrophilic low molecular weight gelators may include but are not limited to a gelator that is peptide-based, gelatin-based, protein-based, glucose-based, specialized compounds such as glycyrrhizic acid diethyl ester, and combinations thereof

In any of the aspects or embodiments described herein, hydrophilic polymers may include but are not limited to a hydrophilic polymer network that is chemically or physically crosslinked.

In any of the aspects or embodiments described herein, a monomer to form a reactive gel material composition is used. In further aspects the monomer includes but is not limited to acrylamide, poly(ethylene glycol) methacrylate or 2-hydroxyethyl methacrylate, 2-trimethylammonioethyl methacrylate chloride, 3-sulfopropyl methacrylate, glycerol methacrylate, 2-trimethylammonioethyl methacrylate chloride, 3-sulfopropyl methacrylate, or tris-acrylamide.

In any of the aspects or embodiments described herein, a polymer as described can include a crosslinker. In further aspects the crosslinkers may include but are not limited to N,N'-methylenebisacrylamide, glycerol dimethacrylate, poly(ethylene glycol) dimethacrylate, or ions.

In any of the aspects or embodiments described herein, a polymer as described can include an initiator. In further aspects the initiator may include but is not limited to 2,2-diethoxyacetophenone, for example.

In any of the aspects or embodiments described herein, the polymer network is formed by in-situ polymerization of monomers, with the optional addition of crosslinkers and/or initiators when they are needed for forming the network.

In any of the aspects or embodiments described herein, the polymer network might be formed by crosslinking preexisting polymers, with the optional addition of crosslinkers and/or initiators when they are needed for forming the network.

In any of the aspects or embodiments described herein, the preexisting polymers may include but are not limited to polyacrylamide, polyacrylic acid, alginate, agarose, chitosan, polyvinyl alcohol, gelatin, polyethylenimine, and combinations thereof.

In any of the aspects or embodiments described herein, a reactive gel material having a non-evaporative hygroscopic liquid, under the conditions (e.g. temperature and pressure) of the intended application of the gel material, is a liquid that can absorb moisture from air, and accordingly maintain a certain amount of water from drying out, and is practically non-evaporative (i.e. the hygroscopic liquid in the gel material can take days, months, or years to dry out).

In any of the aspects or embodiments described herein, a reactive gel material includes a reagent which is any chemical or combination of chemicals, under the conditions (e.g., temperature and pressure) of the intended application of the gel material, which are practically non-evaporative in preferred embodiments and can directly or indirectly facilitate the water-based or water-related reactions for the intended application of the gel material.

In any of the aspects or embodiments described herein, the reagent chemicals may include but are not limited to reactants, buffers, catalysts, compounds critical for the reactants (e.g. surfactants), buffers, or catalysts to function, and combinations thereof.

In any of the aspects or embodiments described herein, the reactants, buffers, catalysts, and compounds may include but are not limited to acids, bases, salts, oxides, oxidizers or reducers, microparticles or nanoparticles, metal-organic frameworks, and combinations thereof.

In any of the aspects or embodiments described herein, the acids may include but are not limited to inorganic or mineral acids, organic acids, polymer supported acids, Lewis acids, acidic zeolites, and the like.

In any of the aspects or embodiments described herein, the bases may include but are not limited to sodium hydroxide, potassium hydroxide, calcium hydroxide, trishydroxymethylaminomethane, triethylamine, ethylmorpholine, and 4-methylmorpholine.

In any of the aspects or embodiments described herein, the salts may include but are not limited to sodium chloride, sodium hypophosphite, sodium hydrogenphosphate, L-Histidine monohydrochloride monohydrate, sodium hypochlorite, and metallic salts including zinc chloride, magnesium nitrate, and ferrous sulfate.

In any of the aspects or embodiments described herein, the oxides may include but are not limited to antimony trioxide and calcium carbonate.

In any of the aspects or embodiments described herein, the oxidizer or reducer may include but are not limited to ammonium persulfate, sodium persulfate, hydrogen peroxide, ferrous sulphate, ascorbic acid, sodiumformaldehyde sulfoxilate, tetramethyl ethylene diamine, Bruggolit 6 and 7, and sodium metabisulfites.

In any of the aspects or embodiments described herein, the microparticles or nanoparticles may include but are not limited to particles of antimony trioxide, calcium carbonate, silica, and silver.

In any of the aspects or embodiments described herein, the metal-organic frameworks may include but are not limited to UiO-66-NH2, MOF-808, PCN-777, Zr-NDC, NU-1000, Cs8Nb6O19, and (Et2NH2)8[(α-PW11O39Zr(µ-OH).

In any of the aspects or embodiments described herein, the reactions of the reactive gel material composition may include but are not limited to acid-base reactions, displacement reactions, addition reactions, decomposition reactions, reduction-oxidation (redox) reactions, precipitation reactions, hydrolysis, enzymatic reactions, and combinations thereof.

In any of the aspects or embodiments described herein, the water-based or water-related reactions are any reaction, under the conditions (e.g., temperature and pressure) of the intended application of the gel material, for which the presence of water is useful or desirable.

In any of the aspects or embodiments described herein, the non-evaporative hygroscopic liquid comprises, e.g., water miscible non-evaporative hygroscopic liquid, such as, e.g., a polyol, sugar alcohol, ionic liquid, dimethyl sulfoxide, dimethyl formamide, and combinations thereof. As used herein, unless the context suggests otherwise, a non-evaporative hygroscopic liquid generally refers to a liquid that loses less than 50 wt% when exposed to atmospheric conditions of 23° C at 1 atmosphere of pressure for one week. In certain embodiments, the hygroscopic liquid loses less than 45, 40, 35, 30, 25, 20, 15, 10, 5 or 1 wt% when exposed to conditions of 23° C at 1 atmosphere of pressure for one week

In further aspects and embodiments, the polyols may include but are not limited to glycerol, glycerol derivatives, ethylene glycol, ethylene glycol derivatives (e.g., tri-ethylene glycol, peg 200), and combinations thereof.

In further aspects and embodiments described herein, the sugar alcohol may include but is not limited to mannitol, erythritol, sorbitol, xylitol, lactitol, isomalt, maltitol, hydrogenated starch hydrolysates (HSH), threitol, arabitol, ribitol, galactitol, fucitol, iditol, inositol, volemitol, maltotritol, maltotetraitol, polyglycitol, and combinations thereof.

In any of the aspects or embodiments described herein, the ionic liquids may include but are not limited to salts derived from 1-methylimidazole (e.g. 1-alkyl-3-methylimidazolium, 1-ethyl-3-methyl- (EMIM), 1-butyl-3-methyl- (BMIM), 1-octyl-3 methyl (OMIM), 1-decyl-3-methyl-(DMIM), 1-dodecyl-3-methyl- docecylMIM), imidazolium cations (e.g. 1-butyl-2,3-dimethylimidazolium (BMMIM or DBMIM) and 1,3-di(N,N-dimethylaminoethyl)-2-methylimidazolium (DAMI)), N-heterocyclic cations derived from pyridine (e.g. 4-methyl-N-butyl-pyridinium (MBPy) and N-octylpyridinium (C8Py)), conventional quaternary ammonium cations that can form ionic liquid (e.g. tetraethylammonium (TEA) and tetrabutylammonium (TBA), Phosphonium cations (R4P+) (such as trihexyl(tetradecyl)phosphonium (P6,6,6,14) and tributyl(tetradecyl)phosphonium (P4,4,4,14)), tetrafluoroborate (BF4), hexafluorophosphate (PF6), bis-trifluoromethanesulfonimide (NTf2), trifluoromethanesulfonate (OTf), dicyanamide (N(CN)2), hydrogen sulphate (HSO4), and ethyl sulphate (EtOSO3)), and combinations thereof.

In any of the aspects or embodiments described herein the reactive gel material composition as described herein further includes but is not limited to hydrophilic low-molecular weight gelators, hydrophilic polymer, and combination thereof.

In any of the aspects or embodiments described herein, a general procedure includes: mixing the components of the reactive gel material including a non-evaporative hygroscopic liquid, a reagent, and a gelling agent, and activating the gelling agent to transform the reactive gel material from a gel solution (i.e. liquid) to a non-flowing gel (i.e. solid).

In any of the aspects or embodiments described herein, the mixing may include water as an optional component, typically at a weight ratio of 1:4 to the non-evaporative hygroscopic liquid, since that amount of water is the amount that one would expect a typical non-evaporative hygroscopic liquid to naturally maintain when the liquid is in equilibrium with air at 23°C and 50% relative humidity.

In any of the aspects or embodiments described herein, the mixing may include low-boiling point liquids as optional components to help with the dissolution or inclusion of the reagent or the gelling agent into the non-evaporative hygroscopic liquid.

In any of the aspects or embodiments described herein, the low-boiling point liquid may include but is not limited to ethanol, isopropanol, 1-butanol, 2-butanol, isobutanol, methanol, MTBE, diethyl ether, and like solvents.

In any of the aspects or embodiments described herein, the mixing may be assisted by heating or modifying the mixing orders of the different components.

In any of the aspects or embodiments described herein, the activation of the gelling agent forms a connected or crosslinked network in the reactive gel material.

In any of the aspects or embodiments described herein, the formation of a polymer network might be activated or assisted by mechanisms that may include but are not limited to changes in chemical compositions, chemical potentials, temperature, and combinations thereof when forming the reactive gel material.

In any of the aspects or embodiments described herein, the formation of a polymer network might be caused by bonding mechanisms that may include but are not limited to chemical bonding, hydrogen bonding, hydrophobic interactions, ionic bridging, π-π interactions, and combinations thereof.

In any of the aspects or embodiments described herein, the formation of a polymer network might be caused by the generation of free radicals via light or heat. Polymerization initiators can be thermal or photo polymerization initiators, which generate radicals or cations upon exposure to heat or light. For example, azo compounds such as 2,2'-azobis(isobutyronitrile) (AIBN) and organic peroxides such as benzoyl peroxide (BPO) are well-known thermal radical initiators, and benzenesulfonic acid esters and alkylsulfonium salts have been developed as thermal cation initiators. Photopolymerization initiators can be divided roughly into three groups based on the generated active species: radicals, cations, and anions. The conventional photopolymerization initiators generate free radicals upon light irradiation, and the resulting radical starts the polymerization process. Typical initiators are represented by benzoin derivatives. Photo-acid generators which produce cations (acid) by light irradiation and photo-base generators also produce anions (base) by light irradiation.

In any of the aspects or embodiments described herein, the formation might be caused by mixing two parts of a reactive gel material solution together.

In any of the aspects or embodiments described herein, a general procedure involves brushing, molding, dip-coating or spraying the gel solution on a solid substrate and then solidifying the gel solution on that substrate.

In any of the aspects or embodiments described herein, the substrate may include but is not limited to a fabric, fibers, a solid surface, and a solid mold or container as exemplified in the examples herein.

In any of the aspects or embodiments described herein, the reactive gel material composition as described herein further includes a low boiling point solvent such as water, a non-evaporative hygroscopic liquid (e.g., a water-miscible non-evaporative hygroscopic liquid), a hydrophilic polymer network, and one or more reagents as described or exemplified herein. In any of the aspects or embodiments described herein, the low boiling point solvent comprises water.

In any of the aspects or embodiments described herein, the non-evaporative hygroscopic liquid is a water miscible non-evaporative hygroscopic liquid, e.g., a polyol, for example, glycerol, 1,3-propanediol, 1,4-butanediol, or a glycol, or for e.g., of structure [R-OH]n wherein R is a C1-C10 alkyl and n is an integer from 2-100 or a like polyhydroxy compound, dimethyl sulfoxide, dimethyl formamide, or a combination thereof. In any aspect or embodiment described herein, the non-evaporative hygroscopic liquid comprises at least one of glycerol, glycol, an ionic liquid, a sugar alcohol, or combination thereof.

An ionic liquid (IL) is a salt in the liquid state. In some contexts, the term has been restricted to salts whose melting point is below some arbitrary temperature, such as 100 °C (212 °F). Examples of ionic liquids include, for example, salts derived from 1-methylimidazole, i.e., 1-alkyl-3-methylimidazolium. Non-limiting examples of ionic liquids suitable for use in compositions and methods described herein include, e.g., 1-ethyl-3-methyl- (EMIM), 1-butyl-3-methyl- (BMIM), 1-octyl-3 methyl (OMIM), 1-decyl-3-methyl-(DMIM), and 1-dodecyl-3-methyl- (docecylMIM). Other imidazolium cations are 1-butyl-2,3-dimethylimidazolium (BMMIM or DBMIM) and 1,3-di(N,N-dimethylaminoethyl)-2-methylimidazolium (DAMI). Other N-heterocyclic cations are derived from pyridine: 4-methyl-N-butyl-pyridinium (MBPy) and N-octylpyridinium (C8Py). Conventional quaternary ammonium cations also form ILs, e.g. tetraethylammonium (TEA) and tetrabutylammonium (TBA), Phosphonium cations (R₄P⁺) such as trihexyl(tetradecyl)phosphonium (P_{6,6,6,14}) and tributyl(tetradecyl)phosphonium (P_{4,4,4,14}); tetrafluoroborate (BF₄), hexafluorophosphate (PF₆), bis-trifluoromethanesulfonimide (NTf₂), trifluoromethanesulfonate (OTf), dicyanamide (N(CN)₂), hydrogen sulphate (HSO₄), and ethyl sulphate (EtOSO₃).

Sugar alcohols (also called polyhydric alcohols, polyalcohols, alditols or glycitols) are organic compounds, typically derived from sugars, containing one hydroxyl group (-OH) attached to each carbon atom. Non-limiting examples of sugar alcohols suitable for use in compositions and methods described herein include, e.g., mannitol, erythritol, sorbitol, xylitol, lactitol, isomalt, maltitol and hydrogenated starch hydrolysates (HSH), threitol, arabitol, ribitol, galactitol, fucitol, iditol, inositol, volemitol, maltotritol, maltotetraitol, and polyglycitol.

In any aspect or embodiment described herein, the hydrophilic polymer is a water-soluble polymer, e.g., an acrylate-based polymer, e.g., an acrylamide polymer, which forms a hydrophilic polymer network. In any aspect or embodiment described herein, the hydrophilic polymer network comprises at least one of a cross-linked hydrophilic chemical monomer, for example, acrylate-based or acrylamide-based, polysaccharide, polyethylene glycol, chitosan, polyvinyl alcohol, alginate, gelatin, agarose, or combination thereof.

In any aspect or embodiment described herein, the polymers in the hydrophilic polymer network are chemically or physically crosslinked (e.g., by heat, UV radiation, or chemical agents).

In any aspect or embodiment described herein, the hydrophilic polymer network comprises a cross-linked acrylamide-based polymer network.

In any aspect or embodiment described herein, the hydrophilic chemical monomer used to synthesize the polymer and its network comprises acrylamide, acrylic acid, polyvinyl alcohol, 2-trimethylammonioethyl methacrylate chloride, hydroxyethylmethacrylate, poly(ethylene glycol) methacrylate, 3-sulfopropyl methacrylate, and tris-acrylamide, crosslinkers such as N,N'-methylenebis(acrylamide), triethylene glycol dimethacrylate, poly(ethylene glycol) dimethacrylate, glycerol dimethacrylate, or a combination thereof.

In any aspect or embodiment described herein, a crosslinker and/or an initiator is mixed with the hydrophilic chemical monomer in a polymerization reaction. Initiation can also be accomplished by exposure to ultraviolet light source, e.g., at 365 nm, until solidification or other means known in the art.

In any of the aspects or embodiments described herein, the amount of water included can be varied such that the base liquid and/or resulting reactive gel material before solidification has the desired viscosity for a particular application. For example, the amount of water included is the amount to result in a base liquid viscosity of 1-100,000 cp, or a reactive gel material viscosity of 1-100,000 cp.

In any of the aspects or embodiments described herein, the reactive gel material comprises water at from about 0.001, 0.01, 0.1, 1, 5, 10, 15, 20, 15, 20, 25, 30, 35, 40, 45, 50, 55, 60, 65, 70, or 75 wt% based on the weight of the base liquid (including all values and subranges in between), the difference to 100 wt% with a hygroscopic liquid as described herein. In any of the aspects or embodiments described herein, the reactive gel material can comprise a non-evaporative hygroscopic liquid as described herein at from about 100, 95, 90, 80, 85, 70, 75,60, 65, or 50 wt% based on the weight of the base liquid (including all values and subranges in between), the difference to 100 wt% with water or one or more additional hygroscopic liquids. In any of the aspects or embodiments described herein, the reactive gel material comprises a liquid component including water and a hygroscopic liquid at a ratio (water to hygroscopic liquid) of from about 0: 1, 1: 1, 1:2, 1:3, 1:4, 1:5, 1:6, 1:7, 1:8, 1:9, or about 1: 10, including ratios in between. In certain embodiments the reactive gel material comprises a water to hygroscopic liquid ratio of about 1:3-1:5. In certain embodiments the reactive gel material comprises a water to hygroscopic liquid ratio of about 1:4. Preferably, any excess water that is included in the formation of the base liquid that is utilized in the preparation of a gel evaporates, thereby forming the reactive gel material matrix.

In any of the aspects or embodiments described herein, reactive gel material comprises hydrophilic gelling agent, for example, a hydrophilic chemical monomer, present at a weight ratio of from about 1:100, 2:100, 3:100, 4:100, 5:100, 6:100, 7:100, 8:100, 9:100, 10:100, 15:100, 20:100, 25:100, 30:100, 35:100, 40:100, 45:100, 50:100, 55:100, 60:100, 65:100, 70:100, 75:100, 80:100, 85:100, 90:100, 95:100 or 100:100 including ratios in between, and in certain embodiments from about 4:100 to about 30:100 including ratios in between, about 5:100-20:100 including ratios in between, or about 5:100 or about 20:100 including ratios in between, relative to the total weight of the base liquid and the reagents.

In any of the aspects or embodiments described herein, reactive gel material comprises a crosslinker agent (i.e., a crosslinker), an initiator agent (i.e., an initiator) or both at weight ratios of about 0.5:100, 1:100, 2:100, 3:100, 4:100, 5:100, 6:100, 7:100, 8:100, 9:100, 10:100, 11:100, 12:100, 13:100, 14:100, 15:100, 16:100, 17:100, 18:100, 19:100, or 20:100 including ratios in between, relative to the weight of the hydrophilic gelling agent, e.g., hydrophilic chemical monomer. In certain embodiments, the reactive gel material comprises a crosslinker, initiator or both at weight ratios of about 1:100-10:100, or about 2:100-5:100 including ratios in between, relative to the weight of the hydrophilic gelling agent, e.g., hydrophilic chemical monomer. In certain embodiments, the reactive gel material comprises a crosslinker, initiator, or both at a weight ratios of about 2:100, about 5:100 or about 10:100 relative to the weight of the hydrophilic gelling agent, e.g., hydrophilic chemical monomer

In any aspect or embodiment described herein, methods of forming a reactive gel material are described. For example, in an embodiment, the method includes forming a reactive gel material comprising the steps of admixing a solution of a non-evaporative hygroscopic liquid, a hydrophilic chemical monomer, and a reagent; and initiating polymerization of the hydrophilic chemical monomer to result in a hydrophilic polymer network. In any aspect or embodiment described herein, the polymerization is performed in the presence of an initiator and/or crosslinker thereby inducing polymerization of the hydrophilic chemical monomer to result in a hydrophilic polymer network.

In any of the aspects or embodiments described herein, the method includes a step of self-initiated chemical or physical crosslinking, for example, with 2-trimethylammonioethyl methacrylate chloride, 3-sulfopropyl methacrylate, glycerol methacrylate, or a combination thereof with no addition of crosslinkers to form the reactive gel material due to self-initiated chemical or physical crosslinking of the hydrophilic polymer network.

In any aspect or embodiment described herein, methods of forming a reactive gel material coating or layer on or within a substrate are provided. For example, in an embodiment, the method comprises the step of providing a reactive gel material as described herein, and coating or applying the reactive gel material on or within (or both) a substrate, e.g., a fabric or a textile, wherein the layer or coating results in a reactive barrier. In any of the aspects or embodiments described herein, the reactive barrier forms a reactive barrier against, for example, a chemical or environmental insult, such as e.g., a pathogen, or physical insult such heat or fire. In an aspect, the cross-linked hydrophilic polymer is acrylamide. In other aspects, a crosslinker is mixed with the hydrophilic chemical monomer to adjust the properties of the gel, for example, strength, rigidity, moisture content, or permeability. In an additional aspect, the disclosure provides a reactive gel material-coated or layered substrate as described and/or produced as described herein.

In any aspect or embodiment described herein, the coating forms a barrier against a harmful chemical such as a pesticide or toxic chemical.

In any aspect or embodiment described herein, a barrier layer is formed on the reactive gel material to control substance exchange with the reactive gel material, using for example superhydrophobic particles.

In an embodiment, the description provides a method of forming a fire-retardant substrate comprising the steps of forming a reactive gel material as described herein including a fire-retardant chemical or fire-retardant chemical composition; and applying the fire-retardant reactive gel material on or within a substrate, e.g., a fabric or a textile, thereby forming a fire-retardant substrate. In an additional aspect, the disclosure provides a fire-retardant substrate, a fire-retardant reactive gel material as described and/or produced as described herein.

In any aspect or embodiment described herein, the description provides a method of forming a reactive gel material indicator substrate comprising the steps of forming a reactive gel material as described herein including an indicator reagent; and applying the indicator reactive gel material on a solid surface or a container, thereby forming an indicator coating. In an additional aspect, the disclosure provides an indicator coating, an indicator reactive gel material as described and/or produced as described herein.

In any aspect or embodiment described herein, the indicator reagent comprises a chemical indicating reagent, for example, a pH indicator comprising one or more indictors including, e.g., thymol blue, bromothymol blue, methyl red, murexide, and phenolphthalein.

In any aspect or embodiment described herein, the description provides a method of forming a CO₂ capture reactive gel material, e.g., a stand-alone gel, layer, or coating on a substrate comprising the steps of forming a reactive gel material as described herein including a CO₂ capture agent; and applying the CO₂ capture reactive gel material on a solid surface or a solid mold or container or layer, thereby forming a CO₂ capture reactive gel material. In an additional aspect, the disclosure provides a CO₂ capture substrate, a CO₂ capture reactive gel material as described and/or produced as described herein.

In any aspect or embodiment described herein, a CO₂ capture reactive gel material is prepared from a polyvinyl alcohol solution mixed with a glycerol solution containing calcium hydroxide. The solution transforms into a physical gel due to the hydrogen bonding of polyvinyl alcohol reaching full gelation.

The reactive gel materials described herein overcome the limitations of traditional water-based reaction media. In an aspect, to prevent evaporation, the material contains a non-evaporative hygroscopic liquid (e.g., Component A) as one of its key components. A non-evaporative hygroscopic liquid such as glycerol can adsorb water from the moisture in air. The amount of water adsorbed can be very significant, for instance, constituting more than 20 wt% of the glycerol solution when the solution is in equilibrium with air at 50% relative humidity under room temperatures (23° C). For all practical purposes, this means the water is always present in the hygroscopic liquid while being open to air. Besides glycerol, other sugar alcohols or other non-evaporative hygroscopic liquids or their derivatives may include, but are not limited to, e.g., ethylene glycol and its derivatives, as well as ionic liquid and its derivatives. Although not strictly required, water might be optionally added to the gel material during its fabrication for ease or convenience, typically at a weight ratio of 20:80 relative to the weight of the hygroscopic liquid. The amount added is generally inconsequential since the final amount of water present in the gel material is primarily governed by the material's equilibration with the moisture in its surroundings.

Together, the hygroscopic liquid and water form the reaction medium. Due to the hydrophilicity of the hygroscopic liquid and the presence of water, most reagents soluble in water would also be soluble in the reaction medium. In an aspect, the reagents (Component B) include but are not limited to acids such as hydrochloric acid, acetic acid, and citric acid; bases such as sodium hydroxide, trisaminomethane, and bicine; and salts such as sodium chloride, zinc chloride, and borax. Together, these reagents enable various water-based reactions to be carried out in the reaction medium, including but not limited to acid-base reactions, precipitation reactions, redox reactions, hydrolysis, enzymatic reactions, and combinations thereof. For reactants that are practically insoluble in the reaction medium, surfactants and low-boiling point solvents (e.g., a solvent that boils preferably below 120° C) might be included in the reaction medium to facilitate their dissolution.

In an aspect, to overcome the need for containment for the reaction medium, the gel material contains a gelling agent such as a hydrophilic polymer network (Component C), turning the reaction medium from a liquid to a solid-like gel. In an aspect, the polymer network might be formed by in-situ polymerization and/or crosslinking of polymer components in the reaction medium. For example, monomers such as acrylamide, acrylic acid, 2-trimethylammonioethyl methacrylate chloride, hydroxyethylmethacrylate, poly(ethylene glycol) methacrylate, 3-sulfopropyl methacrylate, and tris-acrylamide; crosslinkers such as N,N'-methylenebis(acrylamide), triethylene glycol dimethacrylate, poly(ethylene glycol) dimethacrylate , and glycerol dimethacrylate; as well as initiators such as ammonium persulfate, 2,2-diethoxyacetophenone, and Irgacure 2959 might be added into the reaction medium and then polymerized in-situ to form a polymer network via free radical polymerization. Alternatively, pre-existing polymers such as alginate, chitosan, gelatin, and polyvinyl alcohol might be added into the reaction medium and physically crosslinked, for instance via hydrogen bonding or ionic bridging, to form the polymer network. In any aspect or embodiment described herein, the water-soluble polymer network comprises at least one of acrylate-based, acrylamide-based, polysaccharide, alginate, agarose, gelatin, chitosan, polyvinyl alcohol, or a combination thereof. As would be appreciated by the skilled artisan, other examples of hydrophilic low-molecular weight gelators such as those based on dipeptide are known in the art, and can attain the gelling effects; and therefore, can be employed according to the present description, and are intended as part of the same.

In any aspect or embodiment described herein, the reactive gel material forms a protective coating, in which the coating surface can eliminate or neutralize threats (e.g., a chemical threat or biological threat). Due to the nature of the coating being a gel containing a significant amount of liquid and reactants, when a threat is in contact with the coating's surface, a certain level of material exchange can happen at the contacting surface, allowing reactions to be carried out and therefore enabling the elimination of the threat at the surface. For example, in any aspect or embodiment described herein, the reactive gel material is loaded with reagents that are buffer agents keeping a neutral pH of 7. When this reactive gel material is in contact, for example, with harmful aerosols of a strong acid or base, it can quickly neutralize them at its surface. By way of further example, in any aspect or embodiment described herein, the reactive gel material is loaded with biocidal agents. When this reactive gel material is in contact, for example, with microbes, it can inhibit or even kill these microbes due to the release of biocide to its surface.

In an aspect, the combination of the material components for the gel material creates synergy beyond the sum of its parts. For example, the retainment of water by the hygroscopic non-evaporative liquid allows the reaction medium to be exposed to the environment, allowing material exchange such as the entrance of chemicals or substances from the environment into the reaction medium. Due to the hydrophilic nature of the reaction medium, water vapor in air is the most common substance for the exchange. As water vapor can freely enter and exit the reaction medium, this makes the gel material attractive for applications where a high transmission of water vapor is desired. In one embodiment, the gel material might be covered with a layer of barrier or filter to control the material exchange. This layer might consist of superhydrophobic microparticles which can prevent the exchange of liquid water with the reaction medium while still allowing the transmission of water vapor.

The gelling agent such as the hydrophilic polymer network of the gel material also provides important synergy. Besides eliminating the need for containment, it allows solid substances to be evenly distributed in the reaction medium due to the gelation/solidification of the medium by the polymer network, offering several benefits. In one embodiment, the solids can be fire retardants which can make the material self-extinguishing to fire. In another embodiment, the solids can be undissolved reactants in a reaction medium that is already saturated with the reactants, providing a reservoir for a more reactive or sustained reaction. Moreover, the polymer network also adds a degree of responsiveness to the material. In one embodiment, polyvinyl alcohol can naturally form a physical gel in glycerol solutions, for which the gelation can be reversed by heating. This conversion back to liquid enables the reaction medium of the gel material to be more easily removed or recycled.

The above synergy enables the reaction medium to be applied for novel and original applications, for instance, as a wearable reactor. In one embodiment, the material is applied as breathable or a semi-permeable (e.g., to moisture) and reactive fabric coating to protect the user from pesticides via in-situ hydrolysis. In addition to new applications, the gel material also enables improvement to existing applications by eliminating the need to add water. For instance, the testing of pH of a solid generally requires the wetting of the solid's surface. However, due to the gel material always containing water, this requirement is no longer necessary. In one embodiment, the gel material is applied as a visual indicator to detect the pH of dry surfaces. In another embodiment, the material is applied as a visual indicator to detect the metal content of a solid surface. Lastly, the gel material can be used as a passive system to capture undesirable chemicals in air. In one embodiment, the material is applied as a coating to capture carbon dioxide.

As used herein, the term "fabric" or "fiber" is used inclusively in reference to, unless the context indicates otherwise, a material produced by weaving, layering, polymerizing, or other method, such as, e.g., textiles from natural fibers (e.g., wool, linen, cotton, silk, or other plant fiber), or synthetic or polymer fibers (e.g., nylon, acrylic, rayon, polyester, silica or its derivatized fibers, carbon fiber, graphene, or metal fibers), and including composites or derivatives thereof.

As described herein, a reagent is a substance that is used to cause a chemical reaction. In an aspect, a reagent can be used to indicate the presence of another substance.

In certain embodiments, the reactive gel material as described herein can be supersaturated with reagent, i.e., the reagent is in solid form in a reactive gel material and dissolve into the gel reaction medium as it is reacted or as moisture levels increase.

In an aspect, a low boiling point solvent is a solvent that boils preferably below 120° C. Examples are water, ethanol, isopropanol, 1-butanol, 2-butanol, isobutanol, methanol, MTBE, diethyl ether, and like solvents.

In an aspect, a non-evaporative hygroscopic liquid is a liquid that has a boiling point preferably above 120°C. Examples are glycerin, ethylene glycol, polyethylene glycol (PEG) derivatives, and like compounds known in the art.

Hydrophilic polymers contain polar or charged functional groups, rendering them with a strong affinity for water, and they may be soluble in water. Hydrophilic polymers can be grouped by the chemistry of their structure. For example, acrylics include acrylic acid, acrylamide, and maleic anhydride polymers and copolymers. Amine-functional polymers include allylamine, ethyleneimine, oxazoline, and other polymers containing amine groups in their main chains or side chains. These are just some examples of hydrophilic polymers known in the art.

### Exemplary Embodiments

It is expressly contemplated that any of the aspects or embodiments described below can be combined in any combination and those combinations are embraced by the present disclosure even if, for example, a specific combination is not literally stated. Those of skill in the art would readily appreciate that all combinations are clearly and unambiguously derived from the present disclosure, including but not limited to the embodiments of the working examples, and those encompassed by the claims.

In an aspect, the specification provides a reactive gel material comprising: (i) a non-evaporative hygroscopic liquid; (ii) a hydrophilic gelling agent; and (iii) a chemical reagent, wherein components (i)-(iii) form a reactive gel material matrix. The reactive gel material or reactive gel material matrix does not comprise added water other than from atmospheric moisture, under the conditions (e.g., temperature of from about - 40° C to about 100° C, and pressure of around 1 atmosphere) of the intended application of the gel material. In an embodiment, the non-evaporative hygroscopic liquid is a liquid that can attract moisture from air and is practically non-evaporative (e.g., takes days to years to fully evaporate away) under the operational condition (e.g., temperature and pressure) of the material.

In any aspect or embodiment, the reactive gel material or reactive gel material matrix is non-toxic, is not free-flowing, and retains substantially all reagents and chemical reactions within its matrix. In any aspect or embodiment described herein, the reactive gel material or gel material matrix is self-healing, for example, the gel material is sufficiently fluid such that it facilitates filling of small holes or gaps in the matrix and, at the same time, is not a free-flowing liquid.

In any of the aspects or embodiments described herein, the non-evaporative hygroscopic liquid comprises at least one of a sugar alcohol, an ionic liquid, a polyol, or a combination thereof.

In any of the aspects or embodiments described herein, the gel material comprises an effective amount of a chemical reagent, e.g., wherein the amount is sufficient to effectuate a chemical reaction between the reagent and a reactant. In any aspect or embodiment described herein, the reactant is present in the atmosphere. In any aspect or embodiment described herein, the reactant is a liquid or a solid in contact with the reactive gel material.

In any of the aspects or embodiments described herein, the polyol comprises at least one of a glycerol, a glycerol derivative, 1,3-propanediol, 1,4-butanediol, a glycol, a glycol derivative, or a combination thereof. In certain embodiments, the polyol is ethylene glycol or an ethylene glycol derivative, for example, triethylene glycol, PEG, or PEG200.

In any of the aspects or embodiments described herein, the sugar alcohol comprises at least one of mannitol, erythritol, sorbitol, xylitol, lactitol, isomalt, maltitol, hydrogenated starch hydrolysates (HSH), threitol, arabitol, ribitol, galactitol, fucitol, iditol, inositol, volemitol, maltotritol, maltotetraitol, polyglycitol, or a combination thereof.

In any of the aspects or embodiments described herein, the ionic liquid comprises at least one of a salt derived from 1-methylimidazole (e.g. 1-alkyl-3-methylimidazolium, 1-ethyl-3-methyl- (EMIM), 1-butyl-3-methyl- (BMIM), 1-octyl-3 methyl (OMIM), 1-decyl- 3-methyl-(DMIM), 1-dodecyl-3-methyl- (docecylMIM), imidazolium cations (e.g. 1-butyl-2,3 dimethylimidazolium (BMMIM or DBMIM) and 1,3-di(N,N-dimethylaminoethyl)-2-methylimidazolium (DAMI)), N-heterocyclic cations derived from pyridine (e.g. 4-methyl-N-butyl-pyridinium (MBPy) and N-octylpyridinium (C8Py)), conventional quaternary ammonium cations that can form ionic liquid (e.g. tetraethylammonium (TEA) and tetrabutylammonium (TBA), Phosphonium cations (R4P+) such as trihexyl(tetradecyl)phosphonium (P6,6,6,14) and tributyl(tetradecyl)phosphonium (P4,4,4,14), tetrafluoroborate (BF4), hexafluorophosphate (PF6), bis-trifluoromethanesulfonimide (NTf2), trifluoromethanesulfonate (OTf), dicyanamide (N(CN)2), hydrogen sulphate (HSO4), and ethyl sulphate (EtOSO3)), or a combination thereof.

In any of the aspects or embodiments described herein, the hydrophilic gelling agent comprises at least one of a hydrophilic polymer, a water-soluble polymer, a hydrophilic low-molecular weight gelator (i.e., less than about 8000 Daltons, for example, less than about 7000, 6000, 5000, 4000, 3000, 2000, 1000 Daltons or below), or a combination thereof.

In any of the aspects or embodiments described herein, the hydrophilic gelling agent is activated by changes in at least one of a chemical addition, chemical potentials, temperature, or a combination thereof. In any of the aspects or embodiments described herein, the hydrophilic gelling agent is activated by free-radical polymerization.

In any of the aspects or embodiments described herein, the hydrophilic polymer network comprises a crosslinked network in the liquid portion of the reactive gel material matrix such that it is not free-flowing, under the conditions (e.g., temperature of from about negative 40° C to about 100° C, and pressure of around 1 atmosphere) of the intended application of the gel material.

In any of the aspects or embodiments described herein, the reactive gel material matrix comprises the hydrophilic polymer network containing the non-evaporative hygroscopic liquid and chemical reagent, and wherein the reactive gel facilitates a chemical reaction entirely within the reactive gel material matrix.

In any of the aspects or embodiments described herein, the reactive gel material matrix is semi-permeable. For example, in certain embodiments the reactive gel material matrix is permeable to water vapor and reacts with atmospheric chemicals or contaminants.

In any of the aspects or embodiments described herein, the hydrophilic polymer network comprises at least one of an acrylate, an acrylamide, a polysaccharide, a polyethylene glycol, chitosan, polyvinyl alcohol, alginate, gelatin, agarose, or a combination thereof. In any of the aspects or embodiments described herein, the hydrophilic polymer network comprises a chemical monomer selected from at least one of acrylamide, acrylic acid, 2-trimethylammonioethyl methacrylate chloride, hydroxyethylmethacrylate, poly(ethylene glycol) methacrylate, 3-sulfopropyl methacrylate, and tris-acrylamide, and optionally at least one crosslinker comprising N,N'-methylenebis(acrylamide), triethylene glycol dimethacrylate, poly(ethylene glycol) dimethacrylate, glycerol dimethacrylate, ions or a combination thereof.

In any aspect or embodiment described herein, the reactive gel material further or optionally comprises at least one initiator comprising ammonium persulfate, 2,2-diethoxyacetophenone, Irgacure 2959, or a combination thereof. The reactive gel material may optionally be crosslinked by other means, for example, physical crosslinking via the formation of hydrogen bonding or ionic bridging, to form a reactive gel material matrix.

In any aspect or embodiment described herein, the low-molecular weight gelator comprises at least one of peptide-based, gelatin-based, protein-based, glucose-based, or includes a glycyrrhizic acid diethyl ester, or a combination thereof.

In any aspect or embodiment described herein, the reactive gel material comprises a chemical reagent comprising at least one of a salt, an oxide, an oxidizing agent, a reducing agent, a microparticle, a nanoparticle, a metal-organic framework (MOF), an acid, a base, a reactant, a buffer, a catalyst, a chelating agent, a reactive absorbent, an analytical or indicator agent, a co-reactive agent, or a combination thereof.

In any aspect or embodiment described herein, the reagent is a substance that under the operational conditions (e.g., temperature and pressure) of the material can facilitate or lead to water-based or water-related chemical reactions, i.e., where the presence of an aqueous phase is desirable.

In any aspect or embodiment, the reactive gel material as described herein, is configured to facilitate chemical reactions including at least one of acid-base reactions, displacement reactions, addition reactions, decomposition reactions, reduction-oxidation (redox) reactions, precipitation reactions, hydrolysis, enzymatic reactions, or a combination thereof.

In any aspect or embodiment described herein, the acid comprises at least one of an inorganic or mineral acid, an organic acid, a polymer supported acid, a Lewis acid, an acidic zeolite, or a combination thereof.

In any aspect or embodiment described herein, the base comprises at least one of sodium hydroxide, potassium hydroxide, calcium hydroxide, trishydroxymethylaminomethane, triethylamine, ethylmorpholine, 4-methylmorpholine, or a combination thereof.

In any aspect or embodiment described herein, the salt comprises at least one of sodium chloride, sodium hypophosphite, sodium hydrogenphosphate, L-Histidine monohydrochloride monohydrate, sodium hypochlorite, metallic salt including zinc chloride, magnesium nitrate, ferrous sulfate, or a combination thereof.

In any aspect or embodiment described herein, the oxide comprises at least one of antimony trioxide, calcium carbonate, or a combination thereof. In any aspect or embodiment described herein, the oxidizing agent comprises at least one of ammonium persulfate, sodium persulfate, hydrogen peroxide, or a combination thereof. In any aspect or embodiment as described herein, the reducing agent comprises at least one of ferrous sulphate, ascorbic acid, sodium formaldehyde sulfoxylate, tetramethylethylenediamine, Bruggolit 6 and 7, sodium metabisulfite, or a combination thereof.

In any aspect or embodiment described herein, the microparticles or nanoparticles comprise at least one of particles of antimony trioxide, calcium carbonate, silica, silver, or a combination thereof.

In any aspect or embodiment described herein, the metal-organic framework comprises at least one of UiO-66-NH2, MOF-808, PCN-777, Zr-NDC, NU-1000, Cs8Nb6019, (Et2NH2)8[(α-PW11O39Zr(µ-OH)], or a combination thereof.

In any aspect or embodiment described herein, the reactive gel material matrix further comprises at least one of a solvent, a surfactant, or a combination thereof. In certain embodiments, the reactive gel material matrix comprises a surfactant. The surfactant can stabilize or facilitate the dissolution or dispersion of reagents in the reactive gel material matrix.

In any aspect or embodiment described herein, the reactive gel material further comprises at least one of a solvent, a surfactant, or a combination thereof. In any aspect or embodiment described herein, the solvent comprises at least one of water or a low-boiling point liquid. However, as would be understood from the description, other than an initial solvent used to form the reactive gel material matrix, no further addition of water is necessary, and in certain embodiments, no additional water is included other than that contributed by the atmosphere or surrounding environment. In certain embodiments, a surfactant is added to the reactive gel material as described herein to stabilize or facilitate the dissolution of dispersion of the reagents in the reactive gel material.

In any aspect or embodiment described herein, the low-boiling point liquid comprises at least one of ethanol, isopropanol, 1-butanol, 2-butanol, isobutanol, methanol, MTBE, diethyl ether, or a combination thereof.

In additional aspects, the disclosure provides methods of forming a chemical reactive medium comprising: providing the reactive gel material matrix as described herein; and coating or layering the reactive gel material matrix on or within a substrate thereby forming a chemical reactive medium on or within the substrate. In any aspect or embodiment described herein, the reactive gel material matrix is formed prior to coating or layering on the substrate. In certain embodiments, the disclosure provides a method of forming a water-based chemical reactive medium comprising the steps of providing the reactive gel material matrix as described herein, and coating or layering the reactive gel composite material on or within a substrate thereby forming a chemical reactive medium on or within the substrate. In any aspects or embodiments as described herein, the reactive gel material matrix is formed after coating or layering on the substrate. Thus, in certain embodiments, the gel material is applied as a solution and forms a reactive gel material matrix or solid on the substrate.

In any aspect or embodiment of the methods describe herein, the hydrophilic polymer network is acrylamide-based, and/or a crosslinker is added to the reactive gel material matrix, and/or an initiator is added to the reactive gel material matrix to initiate polymerization.

In any of the aspects or embodiments described herein, the chemical reactive medium is coated with a layer of a superhydrophobic particles. In any of the aspects or embodiments described herein, the superhydrophobic particles are fumed silica nanoparticles.

In any of the aspects or embodiments described herein, the methods further include a step of activating the hydrophilic gelling agent, thereby transforming the chemical reactive medium from a gel solution or liquid to a non-flowing gel or solid on or within the substrate as described herein.

In any of the aspects or embodiments described herein, a non-reactive barrier is applied to the reactive gel material matrix or chemical reactive medium after its formation. In certain embodiments, the non-reactive barrier is a semi-permeable layer that controls or modifies (i.e., slows, accelerates, or facilitates) fluid or gas exchange of the reactive gel material or reactive gel material matrix with its surroundings, and comprises, for example, superhydrophobic particles, a silica, plastomer, elastomer, or polymeric material, such as a non-woven fabrics or materials, a woven fabric, a synthetic fiber, a metal, a ceramic, a plastic, wood, stone, glass or silica, an alloy, a composite, a mold, or a combination thereof.

In any of the aspects or embodiments described herein, the chemical reactive medium is applied by at least one of brushing, molding, dip-coating, spraying a gel solution, or a combination thereof, on a substrate and then solidifying the gel solution on the substrate.

In any of the aspects or embodiments described herein, the substrate comprises at least a partial surface of at least one of a solid substrate, a woven fabric, non-woven fabric, a synthetic fiber, a metal, a ceramic, an elastomer, a plastomer, a plastic, wood, stone, glass or silica, an alloy, a composite, a mold, or a combination thereof.

In any of the aspects or embodiments described herein, the substrate comprises a fabric and the chemical reactive medium provides a fabric coating that is at least one of lightweight, breathable, non-toxic, and/or protective.

In any of the aspects or embodiments described herein, the chemical reactive medium is a protective coating for surfaces. In any of the aspects or embodiments described herein, the chemical reactive medium is a visual indicator. In any of the aspects or embodiments described herein, the chemical reactive medium is a fire-retarding medium. In any of the aspects or embodiments described herein, the chemical reactive medium is a biocidal medium. In any of the aspects or embodiments described herein, the chemical reactive medium is a chemical capture medium.

In any of the aspects or embodiments described herein, the disclosure provides a method of forming a fire-retardant medium comprising: providing a reactive gel material as described herein comprising a non-evaporative hygroscopic liquid, a hydrophilic polymer network, and a fire-retardant reagent; and coating or layering the reactive gel material on or within a substrate, thereby forming a fire-retardant medium.

In any of the aspects or embodiments described herein, the disclosure provides a method of forming an indicator medium comprising: providing a reactive gel material comprising a non-evaporative hygroscopic liquid, a hydrophilic polymer network, and an indicator reagent; and coating or layering the reactive gel material on or within a substrate thereby forming an indicator medium. In any of the aspects or embodiments described herein, the indicator reagent is a pH indicator dye. In any of the aspects or embodiments described herein, the pH indicator dye comprises at least one of thymol blue, bromothymol blue, methyl red, phenolphthalein, or a combination thereof. In any of the aspects or embodiments described herein, the polymer is polyvinyl alcohol and indicator reagent is murexide.

In any of the aspects or embodiments described herein, the disclosure provides a method of forming a CO₂ capture medium comprising: providing a reactive gel material comprising a non-evaporative hygroscopic liquid, a hydrophilic polymer network, and a CO₂ capture reagent; and coating or layering the reactive gel material on or within a substrate, thereby forming a CO₂ capture medium.

**In** any of the aspects or embodiments described herein, the disclosure provides a reactive gel material comprising: (i) a base liquid component including water and at least one non-evaporative hygroscopic liquid at a ratio of from 0: 1 to 1:4 based on the weight of the liquid component; (ii) an effective amount of at least one chemical reagent; and (iii) at least one hydrophilic gelling agent at a ratio of from 5:100 to about 100: 100 based on the weight of the based liquid component and at least one chemical reagent, wherein components (i)-(iii) form a reactive gel material matrix.

**In** any of the aspects or embodiments described herein, the at least one non-evaporative hygroscopic liquid is selected from the group consisting of glycerol, polyethylene glycol, triethylene glycol, and combinations thereof.

**In** any of the aspects or embodiments described herein, the at least one hydrophilic gelling agent is at least one hydrophilic chemical monomer.

**In** any of the aspects or embodiments described herein, the at least one hydrophilic chemical monomer is selected from the group consisting of an acrylamide, an acrylate, and combinations thereof.

**In** any of the aspects or embodiments described herein, at least one hydrophilic gelling agent is selected from the group consisting of an acrylamide monomer, 2-trimethylammonioethyl methacrylate chloride, 3-sulfopropyl methacrylate, glycerol methacrylate, tris-acrylamide, gelatin, (hydroxypropyl)methyl cellulose, poly(ethylene glycol) methacrylate, 2-hydroxyethyl methacrylate, and combinations thereof.

In any of the aspects or embodiments described herein, reactive gel material further comprises at least one crosslinking agent at a ratio of 1:100 to 10: 100 based on the weight of the at least one hydrophilic gelling agent.

In any of the aspects or embodiments described herein, the reactive gel material further comprises at least one initiator agent at a ratio of 1:100 to 10: 100 based on the weight of the at least one hydrophilic gelling agent.

In any of the aspects or embodiments described herein, the at least one crosslinking agent is selected from the group consisting of N,N'-methylenebisacrylamide, glycerol dimethacrylate, poly(ethylene glycol) dimethacrylate, and combinations thereof.

In any of the aspects or embodiments described herein, the at least one initiator is 2,2-diethoxyacetophenone.

In any of the aspects or embodiments described herein, the at least one chemical reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof.

In any of the aspects or embodiments described herein, the reactive gel material further comprises fumed silica nanoparticle on the reactive gel material surface.

In any of the aspects or embodiments described herein, the disclosure provides a reactive gel material comprising: (i) a base liquid component including 20 wt% water and 80 wt% glycerol; (ii) an effective amount of at least one chemical reagent; and (iii) an acrylamide monomer at a ratio of 20:200 relative to the weight of the base liquid component, N,N'-methylenebisacrylamide at a ratio of 5: 100 relative to the weight of the acrylamide monomer, and 2,2-diethoxyacetophenone at a ratio of 2: 100 relative to the weight of the acrylamide monomer, wherein the reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof, and wherein components (i)-(iii) form a reactive gel material matrix.

In any of the aspects or embodiments described herein, the disclosure provides a reactive gel material comprising: (i) a base liquid component including 20 wt% water and 80 wt% glycerol, or comprising at least one of glycerol, polyethylene glycol, triethylene glycol, or a combination thereof; (ii) an effective amount of at least one chemical reagent; (iii) at least one of an acrylamide monomer, an acrylate monomer, or a combination thereof, at a ratio of 20:200 relative to the weight of the base liquid component; (iv) at least one of N,N'-methylenebisacrylamide, poly(ethylene glycol) dimethacrylate, glycerol dimethacrylate, or a combination thereof, at a ratio of 5: 100 relative to the weight of (iii); and (v) at least one of 2,2-diethoxyacetophenone at a ratio of 2: 100 relative to the weight of (iii), wherein the reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof, and wherein components (i)-(v) form a reactive gel material matrix.

### EXAMPLES

### Fabrication of the Gel Material

**Example 1:** The gel material can be formed by curing a prepolymer solution consisting of a base liquid, reagents, and polymer components. The base liquid was comprised of 20 wt% water and 80 wt% glycerol. In certain exemplary embodiments, the base liquid is 100 wt% glycerol.

The reagents were comprised of tris(hydroxymethyl)aminomethane, zinc chloride, and sodium hydroxide at concentrations of approximately 3.64 M, 82 mM, and 0.53 M, respectively, relative to the water content of the base liquid. With the reagents, the base liquid had a pH of around 9.5 (the pH is around 10 without the addition of glycerol). The polymer components consisted of monomer, acrylamide, crosslinker N,N'-methylenebisacrylamide, and initiator, 2,2-diethoxyacetophenone, with the monomer at a weight ratio of 20: 100 relative to the total weight of the base liquid and the reagents, the crosslinker and initiator at weight ratios of 5:100 and 2:100, respectively, relative to the weight of the monomer. The curing was performed by exposing the prepolymer solution to an ultraviolet light source at 365 nm until solidification (typically within 15 minutes).

**Example 2:** The gel material is fabricated according to the previous procedure, except that the reagents were combinations of one or more of the following reagents: metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl₂); and buffering agents including trishydroxymethylaminomethane, triethylamine, n-ethylmorpholine, and 4-methylmorpholine.

**Example 3:** The gel material is fabricated according to the previous procedures, except that the monomer was at different weight ratios, ranging from 5:100 to 100: 100 relative to the total weight of the base liquid and the reactants.

**Example 4:** The gel material is fabricated according to the previous procedures, except that the crosslinker was at different weight ratios, ranging from 1:100 to 10: 100 relative to the weight of the monomer.

**Example 5:** The gel material is fabricated according to the previous procedures, except the initiator was at different weight ratios, ranging from 1:100 to 10: 100 relative to the weight of the monomer.

**Example 6:** The gel material is fabricated according to the previous procedures, except that the initiator was a thermal initiator, ammonium persulfate, and the prepolymer solution was cured by heat at 70°C until solidification (typically within 15 minutes).

**Example** 7: The gel material is fabricated according to the previous procedures, except that the monomer was 2-trimethylammonioethyl methacrylate chloride, 3-sulfopropyl methacrylate, glycerol methacrylate, or tris-acrylamide, and the crosslinker was glycerol dimethacrylate.

**Example 8:** The gel material is fabricated according to the previous procedures, except that the monomer was 2-trimethylammonioethyl methacrylate chloride, 3-sulfopropyl methacrylate, or glycerol methacrylate, and there was no addition of crosslinkers to form the gel due to self-initiated chemical or physical crosslinking.

**Example** 9: The gel material was fabricated according to Example 1, except that the gelling agents used were gelatin polymers at different weight ratios, ranging from 5:100 to 100: 100 relative to the weight of the base liquid and the reagents. A solution of the gel material was made by mixing and heating the gel material above the gelation temperature of gelatin in the material mixture (e.g., >50°C), and the curing was performed by cooling this mixture to a temperature below the gelation temperature (e.g., room temperature).

**Example** 10: The gel material was fabricated according to Example 1, except that the gelling agents used were (hydroxypropyl)methyl cellulose at different weight ratios, ranging from 5:100 to 100: 100 relative to the weight of the base liquid and the reagents. Two solutions were made, with one solution containing the reactive base liquid and reagents, and the other solution containing the (hydroxypropyl)methyl cellulose dissolved in water. The curing of the gel material was performed by simply mixing the two solutions together.

**Example 11:** The gel material is fabricated according to the previous procedures, except that the base liquid was triethylene glycol or a mixture of triethylene glycol and glycerol at a weight ratio of 1:1; the monomer was poly(ethylene glycol) methacrylate or 2-hydroxyethyl methacrylate; and the crosslinker was poly(ethylene glycol) dimethacrylate.

### Gel Material as a Fabric Coating for Protection against Harmful Chemicals

**Example 12:** The prepolymer solution prepared as described in Example 1 was used to coat a cotton fabric. The coating process involved soaking the fabric with the prepolymer solution, removing excess solution from the fabric by squeezing the fabric through a ~1 mm gap, and curing the remaining solution on the fabric by exposing the fabric to an ultraviolet light source at 365 nm until the solution was solidified (typically within 15 minutes).

In another experiment, a thermal initiator, ammonium persulfate, was used and the fabric coating was cured by heat at 70°C until solidification (typically within 15 minutes, using a force-air convection oven).

**Example 13:** The prepolymer solution was applied to the fabric by spraying with an air paint sprayer.

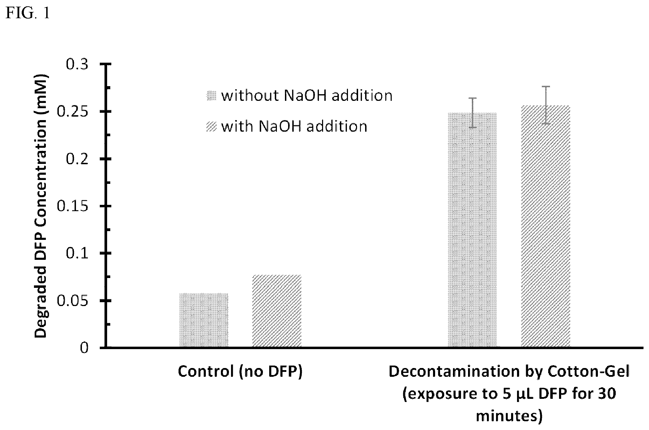

**Example 14:** The coated fabric was tested for pesticide decontamination using diisopropyl fluorophosphate (DFP), which can be hydrolyzed in water. The conversion of DFP was measured with the fluoride ion-selective probe because the degradation of DFP would release fluoride ions. The full conversion of DFP was determined by decontaminating the sample in sodium hydroxide (1M) solution. The probe was calibrated for each test condition, for which known concentrations of sodium fluoride (fluoride ions) were added instead of DFP. The output voltage from the measurements were converted to concentrations following the Nernst relation. The procedures involved adding 5µL of DFP directly onto the surface of the coated fabric (1 cm × 1 cm). After 30 minutes of contact time, the unabsorbed DFP was removed by rinsing the surface with 0.5 mL ethanol and the fabric was then soaked in either sodium hydroxide (1M) solution or acetate buffer (4M, pH 5) to force the decontamination to completion or quench the reaction, respectively. The samples were left overnight to ensure complete diffusion of the (degraded or undegraded) DFP from the coated fabric to the soaking solution. The concentration of fluoride ions in the soaking solution were measured by the fluoride ion probe to determine the concentration of the decontaminated DFP. As a result, the decontaminated DFP concentration was the same for samples with and without further decontamination by sodium hydroxide. In other words, within 30 minutes, DFP absorbed in the coated fabric was fully decontaminated (Figure 1).

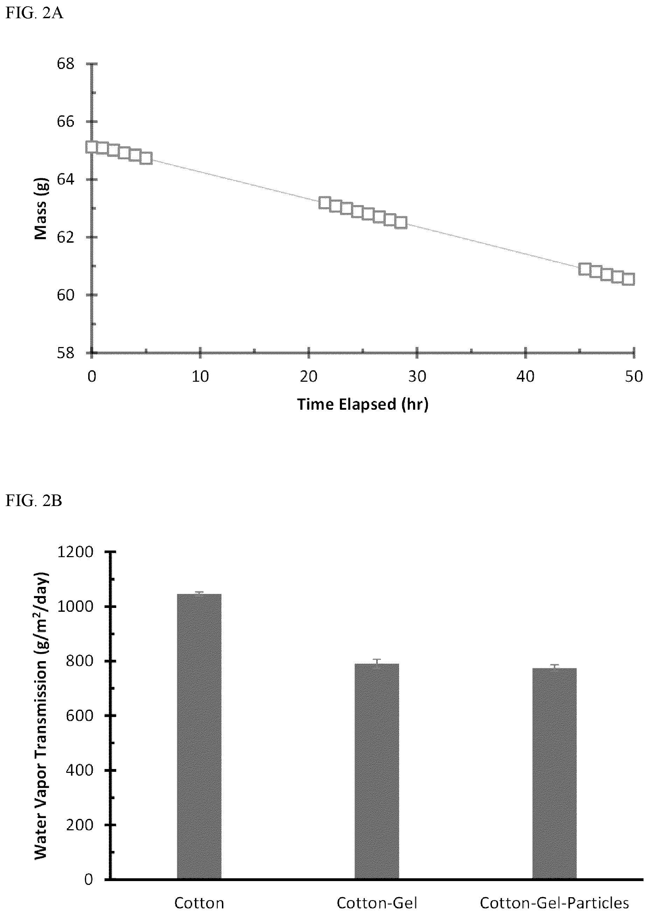

**Example 15:** The coated fabric was tested for breathability. The breathability of fabrics with and without gel coating was evaluated by ASTM E96 via the upright cup water method conditioned at 23°C and 50% relative humidity. The cup was made of polypropylene plastics and had an opening of 3000 mm². At the start of the test, the cup was filled with about 20 g of deionized water and was covered by the coated fabric. The weight of the entire cup was measured periodically and the change in weight was used to determine the water vapor transmission rate of the samples. The gel coating only reduced the breathability of the neat fabric from 1046 to 790 g/m²/day, which still far exceeded the typical requirement of 400 g/m²/day for breathable membranes (Figure 2).

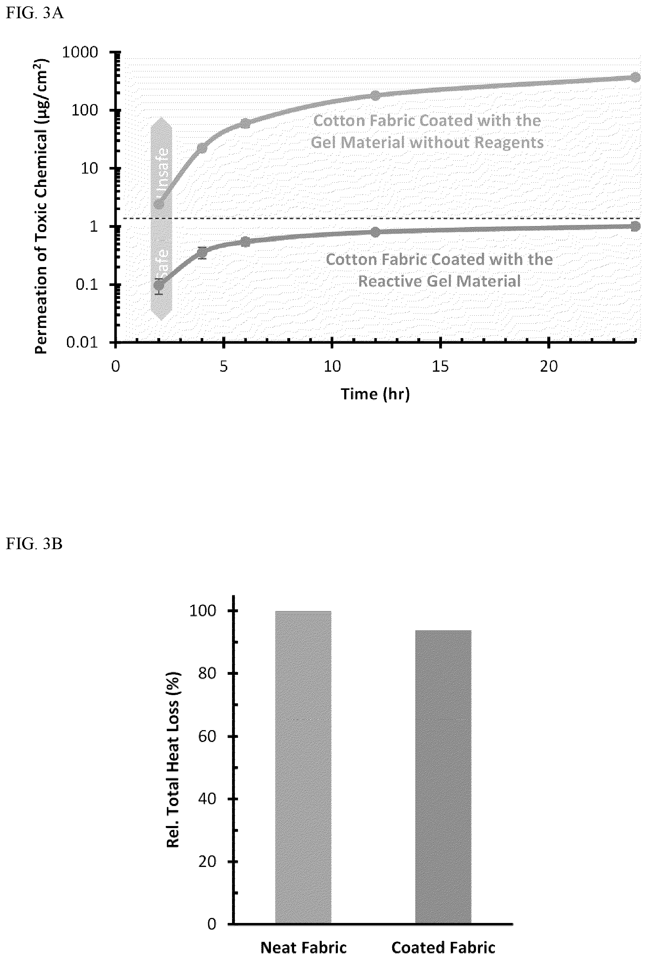

**Example 16:** The coated fabric was tested for protection capability and burden for personal protective ensembles. The protection was determined by measuring the coated fabric against the permeation of a toxic chemical at a contamination density of 10 g/m² according to a closed cap swatch-based liquid challenge. A cotton fabric coated with reactive gel material was tested and compared with cotton fabric coated with the same gel material, but without the incorporation of any reagents. Through active decontamination, the coating was able to reduce the quantity of intact toxic chemical permeating across the coated fabric by a factor of 1000 (Figure 3A). The total heat loss of the same coated fabric was evaluated and compared to the same fabric without coating using sweating hotplate tests in accordance with the ASTM F1868 C standard. The total heat loss of the coated fabric was less than 650 W/m², with the coating reducing the heat loss of the uncoated fabric by less than 10% (Figure 3B).

### Barrier for the Gel Material

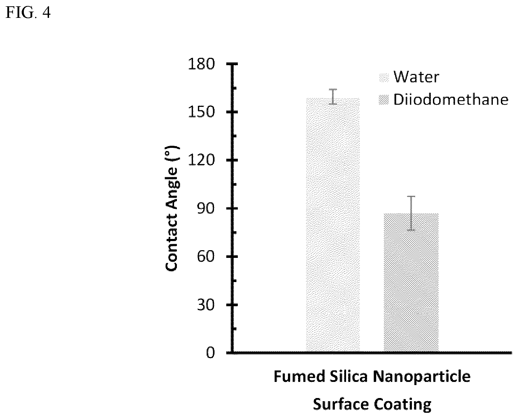

**Example 17:** The coated fabric in Example 12 was coated with a barrier of superhydrophobic particles. Following the procedures in Example 12, a fabric with glycerol gel coating was brushed with a coating solution containing fumed silica nanoparticles and ethanol with a weight ratio of 1:3. After the evaporation of ethanol, the coating solution formed a coating barrier. The hydrophobicity of this barrier was characterized by procedures adapted from ASTM D7409-13, showing a water contact angle of more than 150°. Consequently, the barrier displayed superhydrophobicity, shielding the coated fabric from liquid water (Figure 4).

**Example 18:** The effect of the superhydrophobic barrier on breathability was tested. The procedures were the same as described in Example 12, 16, etc. The barrier was found to only slightly reduce the breathability of the coated fabric from 790 to 775 g/m²/day (Figure 2).

### Gel Material as a Reservoir of Solid Chemicals

**Example 19:** In another example preparation, solid fire retardants were added to the gel material. The gel material was fabricated according to procedures in Example 1 using 2-trimethylammonioethyl methacrylate chloride as the monomer, and ammonium persulfate as thermal initiator. Fire retardant, Sb₂O₃, was added to the associated prepolymer solution at a weight ratio of 5: 100 relative to the weight of the prepolymer solution. Upon well-mixing of the retardant, which is in the form of powder, in the solution, the solution quickly turned into a gel by heating at 70°C.

**Example 20:** The fire-retardant loaded gel material was tested for its flame resistance. Following the procedures adapted from ASTM D 6413, a strip of the gel was ignited by a butane torch on one end under the environmental conditions of 23°C and 50% relative humidity with minimum free air flow from the surroundings. The resulting flame self-extinguished when the gel contained the fire retardant but continued to burn if there were no fire retardants.

**Example 21:** In another example preparation, the fire retardants were magnesium carbonate hydroxide hydrate or aluminum hydroxide hydrate. Similar to Sb₂O₃, the addition of these fire retardants made the gel material more flame resistant.

**Example 22:** In another example preparation, solid tris(hydroxymethyl)aminomethane was added to the gel material. The gel material was fabricated according to procedures in Example 1 with the exception that the concentration of tris(hydroxymethyl)aminomethane was doubled. As the concentration was higher than the saturation concentration of tris(hydroxymethyl)aminomethane in the prepolymer solution, some of the tris(hydroxymethyl)aminomethane remained as undissolved solids. These solids served as a chemical reservoir, which were found to release or dissolve, for instance, when the gel material adsorbed additional water from humid air, keeping the concentration of dissolved tris(hydroxymethyl)aminomethane in the gel material as high as possible, which is desirable since the concentration of the reagent is found to positively correlate with decontamination efficacy.

### Gel Material as a Visual Indicator

**Example 23:** A reactive gel material was fabricated according to Example 1, with the exception that the reagents were pH detecting dyes. The dye solution was prepared according to a well-known recipe by Yamada: 5 mg of thymol blue, 60 mg of bromothymol blue, 12.5 mg methyl red, and 100 mg phenolphthalein were dissolved in 100 ml of 95 vol.% alcohol followed by neutralization with sodium hydroxide solution (0.05 M) to green color and then made up to 200 ml with deionized water. The dye solution was added to the base liquid containing glycerol and water at the weight ratio of 7.5: 100 before polymerization. To test its ability to detect the pH of the solid surfaces, the resulting gel material was pressed against different solid surfaces including citric acid and sodium hydroxide. When in contact with citric acid, the appearance of the gel gradually changed from yellow to orange. In contrast, when in contact with sodium hydroxide, the gel changed to dark blue.

**Example 24:** A reactive gel material was fabricated according to Example 1, with the exception that the reagent was murexide, and the polymer component was polyvinyl alcohol (M.W. 146-186K, fully hydrolyzed). Murexide was dissolved in deionized water at a weight ratio of 1:1000 at room temperature, and the polyvinyl alcohol was dissolved in deionized water at a weight ratio of 1:10 at the temperature of 98°C until full dissolution. The aqueous solution containing murexide was added to glycerol at a weight ratio of 1.25:100. Once the polyvinyl alcohol solution was cooled down to room temperature, it was mixed with the glycerol solution containing murexide so that the weight ratio between glycerol and water in the pre-gel solution was approximately 4:1. Once mixed, the solution would transform into a physical gel over time due to the hydrogen bonding of polyvinyl alcohol, generally taking a day to reach full gelation. To test its ability to detect metal, the resulting gel was pressed against the solid surfaces of different metals including German silver (an alloy of copper, zinc and nickel), and aluminum. Upon contact with German silver, the appearance of the gel gradually changed from pink to light yellow due to the complexation between copper and nickel ions and murexide. On the other hand, when in contact with the aluminum surface, the color of the gel remained unchanged.

### Gel Material as a Coating for Carbon Capture

**Example 25:** A reactive gel material was fabricated according to Example 1, with the exception that the reagent was calcium hydroxide, and the polymer component was polyvinyl alcohol (M.W. 146-186K, fully hydrolyzed). The calcium hydroxide was dissolved in glycerol at a weight ratio of 1:500 and a temperature of 180°C until full dissolution. The polyvinyl alcohol was dissolved in deionized water at a weight ratio of 1:10 and a temperature of 98°C until full dissolution. Once both solutions were cooled to room temperature, these solutions were mixed so that the weight ratio between glycerol and water in the final solution was approximately 4:1. Once mixed, the solution was transformed into a physical gel over time due to the hydrogen bonding of polyvinyl alcohol, generally taking a day to reach full gelation. To demonstrate the gel material's ability to capture carbon dioxide, the gel was applied as a coating and was exposed to carbon dioxide gas. Upon prolonged exposure of 2 hours, the appearance of the gel coating gradually changed from translucent to opaque white, due to the precipitation of calcium carbonate in the gel material as a result of the reaction between carbon dioxide and calcium hydroxide. By heating at 150°C, the gel coating returned to the un-gelled liquid state. This allowed the facile removal of the calcium carbonate precipitates from this gel material for recycling and carbon capture.

**Example** 26: The reactive gel material was fabricated according to Example 1, except that the reagents used were a buffer composed of conjugate acid-base pairs of monosodium phosphate and disodium phosphate. The buffer solution was prepared by dissolving 1.18 g of monosodium phosphate monohydrate and 8.423 g of disodium phosphate heptahydrate in a mixture of 10 g of deionized water and 40 g of glycerol at a temperature of 120°C until fully dissolved. Once the monomer, crosslinker, and initiator were added to the mixture of base liquid and reagents at room temperature, a gel material was formed, with a surface pH of around 7, by exposing it to an ultraviolet light source at 365 nm until solidification. To demonstrate the gel material's ability to neutralize corrosive acids or bases, the gel was applied to a surface as a coating with a thickness of approximately 1.5 mm. A control coating was prepared using the same procedure, except without the addition of the buffer reagents. A droplet of 5 µl of sulfuric acid solution with a pH of 2 was deposited on the coating. Measured by pH indicating strips, the pH of the acid droplet deposited on the coating changed from 2 to 6.0, 6.5, 7, and 7 at 0.5, 1, 2, and 5 minutes of contact, respectively, while the pH of the acid droplet deposited on the control coating remained at pH 2 during these times. The same procedure was repeated for a sodium hydroxide solution. The pH of the base droplet deposited on the coating changed from 12 to 8.5, 7.8, 7.5, and 7 at 0.5, 1, 2, and 5 minutes of contact, respectively, while the pH of the base droplet deposited on the control changed from 12 to 11, 9.5, 9, and 8.5 at these contact times.

To make the composition of reactive gel materials safer, we tested the following non-toxic monomers: poly(ethylene glycol) methacrylate, 3-sulfopropyl methacrylate potassium salt, glycerol monomethacrylate, 2-hydroxyethyl methacrylate, 2-(methacryloyloxy)ethyl trimethylammonium chloride, and n-[tris(hydroxymethyl)methyl]acrylamide. The suitability of these monomers was determined by polymerizing them with different non-toxic initiators and crosslinkers in the presence of the base liquid containing reagents and analyzing their gelation behaviors. In addition to the monomers, a non-toxic polymer, gelatin, that can cause thermal-responsive physical gelation, was also tested in a similar manner. These hydrophilic gelling agents were then evaluated using a custom metric based on safety *(i.e.* the biocompatibility of the monomers to humans), compatibility *(i.e.* the miscibility and stability of the gel components in the presence of the monomers), controllability *(i.e.* the degree of freedom in forming a gel with the desired mechanical properties), processability *(i.e.* the level of ease in making the pre-gelation solution from raw materials), and cost *(i.e.* the price of the raw materials).

As will be clearly and unambiguously understood from the description and above examples, any components of any of the examples can be combined with any of the components of any other examples, and all combinations are contemplated as though expressly described herein.

**Table 1. Assessment of different polymer networks according to safety, compatibility, controllability, processability, and cost, where grade A, B, C, and D, stand for excellent, good, acceptable, and unacceptable, respectively.**

| **Polymer Network** | **Safety** | **Compatibility** | **Controllability** | **Processability** | **Cost** |
|---|---|---|---|---|---|
| Acrylamide | D | A | A | B | A |
| PEG-based | A | D | C | A | A |
| Sulfonate-based | B | A | D | B | B |
| Glycerol-based | B | A | D | A | C |
| HEMA | A | D | B | A | A |
| Tris-acrylamide | B | B | A | C | C |
| METAC | B | A | B | A | A |
| Gelatin | A | A | C | C | A |

The contents of all references, patents, pending patent applications and published patents, cited throughout this application are hereby expressly incorporated by reference.

Those skilled in the art will recognize or be able to ascertain using no more than routine experimentation, many equivalents to the specific embodiments of the invention described herein. Such equivalents are intended to be encompassed by the following claims. It is understood that the detailed examples and embodiments described herein are given by way of example for illustrative purposes only and are in no way considered to be limiting to the invention. Various modifications or changes in light thereof will be suggested to persons skilled in the art and are included within the spirit and purview of this application and are considered within the scope of the appended claims. For example, the relative quantities of the ingredients may be varied to optimize the desired effects, additional ingredients may be added, and/or similar ingredients may be substituted for one or more of the ingredients described. Additional advantageous features and functionalities associated with the systems, methods, and processes of the present invention will be apparent from the appended claims. Moreover, those skilled in the art will recognize, or be able to ascertain using no more than routine experimentation, many equivalents to the specific embodiments of the invention described herein. Such equivalents are intended to be encompassed by the following claims.

Also disclosed herein are the following clauses:
1. A reactive gel material comprising:
   (i) a non-evaporative hygroscopic liquid;
   (ii) a hydrophilic gelling agent; and
   (iii) a chemical reagent,
   wherein components (i)-(iii) form a reactive gel material matrix.
2. The reactive gel material of clause 1, wherein the reactive gel material does not comprise added water other than from atmospheric moisture.
3. The reactive gel material of clause 1 or 2, wherein the gel material comprises an effective amount of the chemical reagent.
4. The reactive gel material as in any of the preceding clauses, wherein the effective amount is sufficient to effectuate a chemical reaction between the chemical reagent and a reactant, e.g., wherein the chemical reaction is a water-based chemical reaction, for example, hydrolysis reaction.
5. The reactive gel material as in any of the preceding clauses, wherein the reactant is present in the atmosphere, or a solid or liquid material that comes into contact with the reactive gel material.
6. The reactive gel material as in any of the preceding clauses, wherein the non-evaporative hygroscopic liquid comprises at least one of a sugar alcohol, an ionic liquid, dimethyl sulfoxide, dimethyl formamide, a polyol, or a combination thereof.
7. The reactive gel material as in any of the preceding clauses, wherein the polyol comprises at least one of a glycerol, a glycerol derivative, 1,3-propanediol, 1,4-butanediol, a glycol, a glycol derivative, or a combination thereof.
8. The reactive gel material as in any of the preceding clauses, wherein the sugar alcohol comprises at least one of mannitol, erythritol, sorbitol, xylitol, lactitol, isomalt, maltitol, hydrogenated starch hydrolysates (HSH), threitol, arabitol, ribitol, galactitol, fucitol, iditol, inositol, volemitol, maltotritol, maltotetraitol, polyglycitol, or a combination thereof.
9. The reactive gel material as in any of the preceding clauses, wherein the ionic liquid comprises at least one of salts derived from 1-methylimidazole (e.g. 1-alkyl-3-methylimidazolium, 1-ethyl-3-methyl- (EMIM), 1-butyl-3-methyl- (BMIM), 1-octyl-3 methyl (OMIM), 1-decyl- 3-methyl- (DMIM), 1-dodecyl-3-methyl- (docecylMIM), imidazolium cations (e.g. 1-butyl-2,3 dimethylimidazolium (BMMIM or DBMIM) and 1,3-di(N,N-dimethylaminoethyl)-2- methylimidazolium (DAMI)), N-heterocyclic cations derived from pyridine (e.g. 4-methyl-N-butyl-pyridinium (MBPy) and N-octylpyridinium (C8Py)), conventional quaternary ammonium cations that can form ionic liquid (e.g. tetraethylammonium (TEA) and tetrabutylammonium (TBA), Phosphonium cations (R4P+) (such as trihexyl(tetradecyl)phosphonium (P6,6,6,14) and tributyl(tetradecyl)phosphonium (P4,4,4,14)), tetrafluoroborate (BF4), hexafluorophosphate (PF6), bis-trifluoromethanesulfonimide (NTf2), trifluoromethanesulfonate (OTf), dicyanamide (N(CN)2), hydrogen sulphate (HSO4), and ethyl sulphate (EtOSO3)), or a combination thereof.
10. The reactive gel material as in any of the preceding clauses, wherein the hydrophilic gelling agent comprises at least one of a hydrophilic polymer, a water-soluble polymer, a hydrophilic low-molecular weight gelator, or a combination thereof.
11. The reactive gel material as in any of the preceding clauses, wherein the hydrophilic polymer forms a crosslinked hydrophilic polymer network in the liquid portion of the gel material matrix such that it is not free-flowing.
12. The reactive gel material as in any of the preceding clauses, wherein the reactive gel material comprises the hydrophilic polymer network containing the non-evaporative hygroscopic liquid and chemical reagent, and wherein the reactive gel material facilitates a chemical reaction entirely within the reactive gel material matrix.
13. The reactive gel material as in any of the preceding clauses, wherein the reactive gel material is semi-permeable.
14. The reactive gel material as in any of the preceding clauses, wherein the gel material is permeable to water vapor and reacts with atmospheric chemicals or contaminants.
15. The reactive gel material as in any of the preceding clauses, wherein the hydrophilic polymer comprises a chemical monomer selected from at least one of acrylamide, acrylic acid, 2-trimethylammonioethyl methacrylate chloride, hydroxyethylmethacrylate, poly(ethylene glycol) methacrylate, 3-sulfopropyl methacrylate, and tris-acrylamide,
   and optionally at least one crosslinker comprising N,N'-methylenebis(acrylamide), triethylene glycol dimethacrylate, poly(ethylene glycol) dimethacrylate, glycerol dimethacrylate, ions, or a combination thereof,
   and optionally at least one initiator comprising ammonium persulfate, 2,2-diethoxyacetophenone, and Irgacure 2959, or a combination thereof,
   wherein the hydrophilic polymer is added into a gel forming reaction medium and physically crosslinked or chemically crosslinked, e.g., via hydrogen bonding, ionic bridging, or free radical polymerization or a combination thereof, to form a reactive gel material matrix.
16. The reactive gel material as in any of the preceding clauses, wherein the hydrophilic polymer network comprises at least one of an acrylate, a polyacrylate, a polyacrylamide, a polysaccharide, a polyethylene glycol, chitosan, polyvinyl alcohol, alginate, gelatin, agarose, or a combination thereof, and optionally at least one initiator comprising ammonium persulfate, 2,2-diethoxyacetophenone, Irgacure 2959, or a combination thereof, wherein the hydrophilic polymer network is added into a gel forming reaction medium physically crosslinked or chemically crosslinked, e.g., via hydrogen bonding, ionic bridging, or free radical polymerization or a combination thereof, to form a reactive gel material matrix.
17. The reactive gel material as in any of the preceding clauses, wherein the low-molecular weight gelator is at least one of peptide-based, gelatin-based, protein-based, glucose-based, or includes a glycyrrhizic acid diethyl ester, or a combination thereof.
18. The reactive gel material as in any of the preceding clauses, wherein the chemical reagent comprises at least one of a salt, an oxide, an oxidizing agent, a reducing agent, a microparticle, a nanoparticle, a metal-organic framework (MOF), an acid, a base, a reactant, a buffer, a catalyst, a chelating agent, a reactive absorbent, an analytical agent, a co-reactive agent, or a combination thereof.
19. The reactive gel material as in any of the preceding clauses, wherein the acid comprises at least one of an inorganic or mineral acid, an organic acid, a polymer supported acid, a Lewis acid, an acidic zeolite, or a combinations thereof.
20. The reactive gel material as in any of the preceding clauses, wherein the base comprises at least one of sodium hydroxide, potassium hydroxide, calcium hydroxide, trishydroxymethylaminomethane, triethylamine, ethylmorpholine, 4-methylmorpholine, or a combination thereof.
21. The reactive gel material as in any of the preceding clauses, wherein the salt comprises at least one of sodium chloride, sodium hypophosphite, sodium hydrogenphosphate, L-histidine monohydrochloride monohydrate, sodium hypochlorite, metallic salt including zinc chloride, magnesium nitrate, ferrous sulfate, or a combination thereof.
22. The reactive gel material as in any of the preceding clauses, wherein the oxide comprises at least one of antimony trioxide, calcium carbonate, or a combination thereof.
23. The reactive gel material as in any of the preceding clauses, wherein the oxidizing agent comprises at least one of ammonium persulfate, sodium persulfate, hydrogen peroxide, or a combination thereof, and wherein the reducing agent comprises at least one of ferrous sulphate, ascorbic acid, sodium formaldehyde sulfoxylate, tetramethylethylenediamine, Bruggolit 6 and 7, sodium metabisulfite, or a combination thereof.
24. The reactive gel material as in any of the preceding clauses, wherein the microparticles or nanoparticles comprise at least one of particles of antimony trioxide, calcium carbonate, silica, silver, or a combination thereof.
25. The reactive gel material as in any of the preceding clauses, wherein the metal-organic framework comprises at least one of Ui0-66-NH2, MOF-808, PCN-777, Zr-NDC, NU-1000, Cs8Nb6019, (Et2NH2)8[(α-PW11O39Zr(µ-OH)], or a combination thereof.
26. The reactive gel material as in any of the preceding clauses, further comprising at least one of a solvent, a surfactant, or a combination thereof.
27. The reactive gel material as in any of the preceding clauses, wherein the solvent comprises at least one of water or a low-boiling point liquid.
28. The reactive gel material as in any of the preceding clauses, wherein the low-boiling point liquid comprises at least one of ethanol, isopropanol, 1-butanol, 2-butanol, isobutanol, methanol, MTBE, diethyl ether, or a combination thereof.
29. The reactive gel material as in any of the preceding clauses, wherein the reactive gel material is self-healing.
30. A method of forming a chemical reactive medium comprising:
   providing the reactive gel material of clause 1; and
   coating or layering the reactive gel material on or within a substrate thereby forming a chemical reactive medium on or within the substrate.
31. A method of forming a water-based chemical reactive medium comprising:
   providing the reactive gel material of clause 1; and
   coating or layering the reactive gel material on or within a substrate thereby forming a chemical reactive medium on or within the substrate.
32. The method of clause 26 or 27, wherein the chemical reactive medium enables aqueous-based chemical reactions within or on the surface of the chemical reactive medium under open atmospheric conditions where the presence of water is desirable.
33. The method as in any of the preceding clauses, wherein the hydrophilic polymer network is acrylamide-based.
34. The method as in any of the preceding clauses, wherein a crosslinker is added to the reactive gel composite material.
35. The method as in any of the preceding clauses, wherein an initiator is added to the reactive gel composite material to initiate polymerization.
36. The method as in any of the preceding clauses, wherein the chemical reactive medium is coated with a layer of superhydrophobic particles.
37. The method as in any of the preceding clauses, wherein the superhydrophobic particles are fumed silica nanoparticles.
38. The method as in any of the preceding clauses, wherein the chemical reactive medium does not comprise added water other than from atmospheric moisture.
39. The method as in any of the preceding clauses, wherein the non-evaporative hygroscopic liquid comprises at least one of a sugar alcohol, an ionic liquid, a polyol or a combination thereof.
40. The method as in any of the preceding clauses, wherein the polyol comprises glycerol, a glycerol derivative, 1,3-propanediol, 1,4-butanediol, a glycol, a glycol derivative (e.g., triethylene glycol, PEG, PEG200), or a combination thereof.
41. The method as in any of the preceding clauses, wherein the sugar alcohol comprises at least one of mannitol, erythritol, sorbitol, xylitol, lactitol, isomalt, maltitol, hydrogenated starch hydrolysates (HSH), threitol, arabitol, ribitol, galactitol, fucitol, iditol, inositol, volemitol, maltotritol, maltotetraitol, polyglycitol, or a combination thereof.
42. The method as in any of the preceding clauses, wherein the ionic liquid comprises at least one of a salt derived from 1-methylimidazole (e.g. 1-alkyl-3-methylimidazolium, 1-ethyl-3-methyl- (EMIM), 1-butyl-3-methyl- (BMIM), 1-octyl-3 methyl (OMIM), 1-decyl- 3-methyl- (DMIM), 1-dodecyl-3-methyl- (docecylMIM), imidazolium cations (e.g. 1-butyl-2,3 dimethylimidazolium (BMMIM or DBMIM) and 1,3-di(N,N-dimethylaminoethyl)-2-methylimidazolium (DAMI)), N-heterocyclic cations derived from pyridine (e.g. 4-methyl-N-butyl-pyridinium (MBPy) and N-octylpyridinium (C8Py)), conventional quaternary ammonium cations that can form ionic liquid (e.g. tetraethylammonium (TEA) and tetrabutylammonium (TBA), Phosphonium cations (R4P+) (such as trihexyl(tetradecyl)phosphonium (P6,6,6,14) and tributyl(tetradecyl)phosphonium (P4,4,4,14)), tetrafluoroborate (BF4), hexafluorophosphate (PF6), bis-trifluoromethanesulfonimide (NTf2), trifluoromethanesulfonate (OTf), dicyanamide (N(CN)2), hydrogen sulphate (HSO4), and ethyl sulphate (EtOSO3)), or a combination thereof.
43. The method as in any of the preceding clauses, wherein the hydrophilic gelling agent comprises at least one of a hydrophilic polymer comprising a water-soluble polymer, a hydrophilic low-molecular weight gelator, or a combination thereof.
44. The method as in any of the preceding clauses, wherein the hydrophilic polymer forms a crosslinked hydrophilic polymer network in the liquid portion of the gel material such that it is not free-flowing.
45. The method as in any of the preceding clauses, wherein the chemical reactive medium comprises the hydrophilic polymer network containing the non-evaporative hygroscopic liquid and chemical reagent, and wherein the reactive gel facilitates a chemical reaction within the reactive gel material or on the surface of the reactive gel material.
46. The method as in any of the preceding clauses, wherein the chemical reactive medium is semi-permeable.
47. The method as in any of the preceding clauses, wherein the chemical reactive medium is permeable to water vapor and reacts with atmospheric chemicals or contaminants.
48. The method as in any of the preceding clauses, wherein the hydrophilic polymer network comprises a chemical monomer selected from at least one of acrylamide, acrylic acid, 2-trimethylammonioethyl methacrylate chloride, hydroxyethylmethacrylate, poly(ethylene glycol) methacrylate, 3-sulfopropyl methacrylate, and tris-acrylamide, and
   optionally at least one crosslinker comprising N,N'-methylenebis(acrylamide), triethylene glycol dimethacrylate, poly(ethylene glycol) dimethacrylate, glycerol dimethacrylate, ions or a combination thereof, and
   optionally at least one initiator comprising ammonium persulfate, 2,2-diethoxyacetophenone, Irgacure 2959, or a combination thereof,
   wherein the hydrophilic polymer is added into a gel forming reaction medium and physically crosslinked or chemically crosslinked, e.g., via hydrogen bonding, ionic bridging, or free radical polymerization or a combination thereof, to form a reactive gel material matrix.
49. The method as in any of the preceding clauses, wherein the hydrophilic polymer network comprises at least one of an acrylate, polyacrylate, an acrylamide, polyacrylamide, a polysaccharide, a polyethylene glycol, chitosan, polyvinyl alcohol, alginate, gelatin, agarose, or a combination thereof; and optionally at least one initiator comprising ammonium persulfate, 2,2-diethoxyacetophenone, Irgacure 2959, or a combination thereof, wherein the hydrophilic polymer network is physically crosslinked or chemically crosslinked, e.g., via hydrogen bonding, ionic bridging, or free radical polymerization or a combination thereof, to form a reactive gel material matrix.
50. The method as in any of the preceding clauses, wherein the low-molecular weight gelator comprises at least one of peptide-based, gelatin-based, protein-based, glucose-based, or includes a glycyrrhizic acid diethyl ester, or a combination thereof.
51. The method as in any of the preceding clauses, wherein the chemical reagent comprises at least one of a salt, an oxide, an oxidizing agent, a reducing agent, a microparticle, a nanoparticle, a metal-organic framework (MOF), an acid, a base, a reactant, a buffer, a catalyst, a chelating agent, a reactive absorbent, an analytical agent, a co-reactive agent, or a combination thereof.
52. The method as in any of the preceding clauses, wherein the acid comprises at least one of an inorganic or mineral acid, an organic acid, a polymer supported acid, a Lewis acid, an acidic zeolite, or a combination thereof.
53. The method as in any of the preceding clauses, wherein the base comprises at least one of sodium hydroxide, potassium hydroxide, calcium hydroxide, trishydroxymethylaminomethane, triethylamine, ethylmorpholine, 4-methylmorpholine, or a combination thereof.
54. The method as in any of the preceding clauses, wherein the salt comprises at least one of sodium chloride, sodium hypophosphite, sodium hydrogenphosphate, L-Histidine monohydrochloride monohydrate, sodium hypochlorite, metallic salt including zinc chloride, magnesium nitrate, ferrous sulfate, or a combination thereof.
55. The method as in any of the preceding clauses, wherein the oxide comprises at least one of antimony trioxide, calcium carbonate, or a combination thereof.
56. The method as in any of the preceding clauses, wherein the oxidizing agent comprises at least one of ammonium persulfate, sodium persulfate, hydrogen peroxide, or a combination thereof, and wherein the reducing agent comprises at least one of ferrous sulphate, ascorbic acid, sodium formaldehyde sulfoxylate, tetramethylethylenediamine, Bruggolit 6 and 7, sodium metabisulfite, or a combination thereof.
57. The method as in any of the preceding clauses, wherein the microparticles or nanoparticles comprise at least one of particles of antimony trioxide, calcium carbonate, silica, silver, or a combination thereof.
58. The method as in any of the preceding clauses, wherein the metal-organic framework comprises at least one of UiO-66-NH2, MOF-808, PCN-777, Zr-NDC, NU-1000, Cs8Nb6019, (Et2NH2)8[(α-PWII039Zr(µ-OH)], or a combination thereof.
59. The method as in any of the preceding clauses, further comprising at least one of a solvent, a surfactant, or a combination thereof.
60. The method as in any of the preceding clauses, wherein the solvent comprises at least one of water or a low-boiling point liquid.
61. The method as in any of the preceding clauses, wherein the low-boiling point liquid comprises at least one of ethanol, isopropanol, 1-butanol, 2-butanol, isobutanol, methanol, MTBE, diethyl ether, or a combination thereof.
62. The method as in any of the preceding clauses, wherein the method further includes a step of activating the hydrophilic gelling agent thereby transforming the chemical reactive medium from a gel solution or a liquid into a non-flowing gel or a solid on or within the substrate.
63. The method as in any of the preceding clauses, wherein the hydrophilic gelling agent is activated by changes in at least one of a chemical addition, chemical potentials, temperature, or a combination thereof.
64. The method as in any of the preceding clauses, wherein the hydrophilic gelling agent is activated by free-radical polymerization.
65. The method as in any of the preceding clauses, wherein a non-reactive barrier is applied to the chemical reactive medium after its formation thereby controlling (e.g., increasing, decreasing, or selectively allowing) fluid or gas exchange of the chemical reactive medium with its surroundings.
66. The method as in any of the preceding clauses, wherein the chemical reactive medium is applied by at least one of brushing, molding, dip-coating, spraying a gel solution, or a combination thereof on a substrate, and then solidifying the gel solution on the substrate.
67. The method as in any of the preceding clauses, wherein the substrate comprises at least a partial surface of at least one of a solid substrate, a woven fabric, non-woven fabric, a synthetic fiber, a metal, a ceramic, an elastomer, a plastomer, a plastic, wood, stone, glass or silica, an alloy, a composite, a mold, or a combination thereof.
68. The method as in any of the preceding clauses, wherein the substrate comprises a fabric and the chemical reactive medium provides a breathable protective fabric coating.
69. The method as in any of the preceding clauses, wherein the chemical reactive medium is a protective coating for surfaces.
70. The method as in any of the preceding clauses, wherein the chemical reactive medium is a visual indicator.
71. The method as in any of the preceding clauses, wherein the chemical reactive medium is a fire-retarding medium.
72. The method as in any of the preceding clauses, wherein the chemical reactive medium is a biocidal medium.
73. The method as in any of the preceding clauses, wherein the chemical reactive medium is a chemical capture medium.
74. A reactive gel material comprising
   i) a base liquid component including water and at least one non-evaporative hygroscopic liquid at a ratio of from 0: 1 to 1:4 based on the weight of the liquid component;
   ii) an effective amount of at least one chemical reagent; and
   iii) at least one hydrophilic gelling agent at a ratio of from 5: 100 to about 100: 100 based on the weight of the based liquid component and the at least one chemical reagent,
   wherein components (i)-(iii) form a reactive gel material matrix.
75. The material as in any of the preceding clauses, wherein at least one non-evaporative hygroscopic liquid is selected from the group consisting of glycerol, polyethylene glycol, triethylene glycol, and combinations thereof.
76. The material as in any of the preceding clauses, wherein the at least one hydrophilic gelling agent is at least one hydrophilic chemical monomer.
77. The material as in any of the preceding clauses, wherein the at least one hydrophilic chemical monomer is selected from the group consisting of an acrylamide, an acrylate, and combinations thereof.
78. The material as in any of the preceding clauses, wherein the at least one at least one hydrophilic gelling agent is selected from the group consisting of an acrylamide monomer, 2-trimethylammonioethyl methacrylate chloride, 3-sulfopropyl methacrylate, glycerol methacrylate, tris-acrylamide, gelatin, (hydroxypropyl)methyl cellulose, poly(ethylene glycol) methacrylate, 2-hydroxyethyl methacrylate, and combinations thereof.
79. The material as in any of the preceding clauses, further comprising at least one crosslinking agent at a ratio of 1:100 to 10: 100 based on the weight of the at least one hydrophilic gelling agent.
80. The material as in any of the preceding clauses, further comprising at least one initiator agent at a ratio of 1:100 to 10: 100 based on the weight of the at least one hydrophilic gelling agent.
81. The material as in any of the preceding clauses, wherein the at least one crosslinking agent is selected from the group consisting of N,N'-methylenebisacrylamide, glycerol dimethacrylate, poly(ethylene glycol) dimethacrylate, and combinations thereof.
82. The material as in any of the preceding clauses, wherein the at least one initiator is 2,2-diethoxyacetophenone.
83. The material as in any of the preceding clauses, wherein the at least one chemical reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, and sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof.
84. The material as in any of the preceding clauses, wherein the reactive gel material further comprises fumed silica nanoparticles on the reactive gel material surface.
85. A reactive gel material comprising:
   (i) a base liquid component including 20 wt% water and 80 wt% glycerol;
   (ii) an effective amount of at least one chemical reagent; and
   (iii) an acrylamide monomer at a ratio of 20:200 relative to the weight of the base liquid component, N,N'-methylenebisacrylamide at a ratio of 5: 100 relative to the weight of the acrylamide monomer, and 2,2-diethoxyacetophenone at a ratio of 2: 100 relative to the weight of the acrylamide monomer,

   wherein the reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, and sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof, and
   wherein components (i)-(iii) form a reactive gel material matrix.
86. A reactive gel material comprising:
   (i) a base liquid component including 20 wt% water and 80 wt% glycerol, or comprising at least one of glycerol, polyethylene glycol, triethylene glycol, or a combination thereof;
   (ii) an effective amount of at least one chemical reagent;
   (iii) at least one of an acrylamide monomer, an acrylate monomer, or a combination thereof, at a ratio of 20:200 relative to the weight of the base liquid component;
   (iv) at least one of N,N'-methylenebisacrylamide, poly(ethylene glycol) dimethacrylate, glycerol dimethacrylate, or a combination thereof, at a ratio of 5: 100 relative to the weight of (iii); and
   (v) at least one of 2,2-diethoxyacetophenone at a ratio of 2: 100 relative to the weight of (iii),

   wherein the reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, and sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof, and
   wherein components (i)-(v) form a reactive gel material matrix.
87. A method of forming a fire-retardant medium comprising:
   providing a reactive gel material comprising a non-evaporative hygroscopic liquid, a hydrophilic polymer network, and a fire-retardant reagent; and
   coating or layering the reactive gel material on or within a substrate thereby forming a fire-retardant medium.
88. A method of forming an indicator medium comprising:
   providing a reactive gel material comprising a non-evaporative hygroscopic liquid, a hydrophilic polymer network, and an indicator reagent; and
   coating or layering the reactive gel material on or within a substrate thereby forming an indicator medium.
89. The method of clause 88, wherein the indicator reagent is a pH indicator dye.
90. The method of clause 89, wherein the pH indicator dye comprises at least one of thymol blue, bromothymol blue, methyl red, phenolphthalein or a combination thereof.
91. The method of clause 88, wherein the hydrophilic polymer network is polyvinyl alcohol and indicator reagent is murexide.
92. A method of forming a CO₂ capture medium comprising:
   providing a reactive gel material comprising a non-evaporative hygroscopic liquid, a hydrophilic polymer network, and a CO₂ capture reagent; and
   coating or layering the reactive gel material on or within a substrate thereby forming a CO₂ capture medium.
93. A reactive gel material comprising:
   (i) a base liquid component including 20 wt% water and 80 wt% glycerol, or comprising at least one of glycerol, polyethylene glycol, triethylene glycol, or a combination thereof;
   (ii) an effective amount of at least one chemical reagent; and
   (iii) gelatin;

   wherein the reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, and sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH2; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof, and
   wherein components (i)-(v) form a reactive gel material matrix.

## Claims

1. A reactive gel material comprising
i) a base liquid component including water and at least one non-evaporative hygroscopic liquid at a ratio of from 0: 1 to 1:4 based on the weight of the liquid component;
ii) an effective amount of at least one chemical reagent; and
iii) at least one hydrophilic gelling agent at a ratio of from 5:100 to about 100: 100 based on the weight of the based liquid component and the at least one chemical reagent,
wherein components (i)-(iii) form a reactive gel material matrix.

2. The material of claim 1, wherein at least one non-evaporative hygroscopic liquid is selected from the group consisting of glycerol, polyethylene glycol, triethylene glycol, and combinations thereof.

3. The material of claim 1 or 2, wherein the at least one hydrophilic gelling agent is at least one hydrophilic chemical monomer.

4. The material of claim 3, wherein the at least one hydrophilic chemical monomer is selected from the group consisting of an acrylamide, an acrylate, and combinations thereof.

5. The material of any one of claims 1 to 4, wherein the at least one at least one hydrophilic gelling agent is selected from the group consisting of an acrylamide monomer, 2-trimethylammonioethyl methacrylate chloride, 3-sulfopropyl methacrylate, glycerol methacrylate, tris-acrylamide, gelatin, (hydroxypropyl)methyl cellulose, poly(ethylene glycol) methacrylate, 2-hydroxyethyl methacrylate, and combinations thereof.

6. The material of any one of claims 1 to 5, further comprising at least one crosslinking agent at a ratio of 1:100 to 10: 100 based on the weight of the at least one hydrophilic gelling agent.

7. The material of claim 6, wherein the at least one crosslinking agent is selected from the group consisting of N,N'-methylenebisacrylamide, glycerol dimethacrylate, poly(ethylene glycol) dimethacrylate, and combinations thereof.

8. The material of any one of claims 1 to 7, further comprising at least one initiator agent at a ratio of 1:100 to 10:100 based on the weight of the at least one hydrophilic gelling agent.

9. The material of claim 8, wherein the at least one initiator is 2,2-diethoxyacetophenone.

10. The material of any one of claims 1 to 10, wherein the at least one chemical reagent is selected from the group consisting of buffering agents including tris(hydroxymethyl)aminomethane, triethylamine, zinc chloride, calcium hydroxide, monosodium phosphate, monosodium phosphate monohydrate, disodium phosphate, disodium phosphate heptahydrate, and sodium hydroxide; metal-dipicolylamine (DPA) complexes including Fe(II)-DPA, Ni(II)-DPA, and Zn(II)-DPA; polymers including polyvinylpyrrolidone; metal organic frameworks including UiO-66-NH₂; small molecules including benzamide oxime; metallic ions including zinc (ZnCl2); n-ethylmorpholine; 4-methylmorpholine; a dye, including thymol blue, bromothymol blue, methyl red, and phenophthalein; murexide; and combinations thereof.

11. The material of any one of claims 1 to 11, wherein the reactive gel material further comprises fumed silica nanoparticles on the reactive gel material surface.

12. A method of forming a water-based chemical reactive medium comprising:
providing the reactive gel material of any one of claims 1 to 11; and
coating or layering the reactive gel material on or within a substrate thereby forming a chemical reactive medium on or within the substrate.

13. The method of claim 12, wherein the chemical reactive medium:
enables aqueous-based chemical reactions within or on the surface of the chemical reactive medium under open atmospheric conditions where the presence of water is desirable; and/or is permeable to water vapor and reacts with atmospheric chemicals or contaminants.

14. The method of claim 12 or 13, wherein the chemical reactive medium comprises an hydrophilic polymer network containing the non-evaporative hygroscopic liquid and chemical reagent, and wherein the reactive gel facilitates a chemical reaction within the reactive gel material or on the surface of the reactive gel material.

15. The method of any one of claims 12 to 14, wherein the method further includes a step of activating the hydrophilic gelling agent thereby transforming the chemical reactive medium from a gel solution or a liquid into a non-flowing gel or a solid on or within the substrate.
